(19) Europäisches Patentamt
European Patent Office
Office européen des brevets

(11) **EP 4 703 444 A1**

(12) **EUROPEAN PATENT APPLICATION**

(43) Date of publication:
**04.03.2026 Bulletin 2026/10**

(21) Application number: **25197197.4**

(22) Date of filing: **21.08.2025**

(51) International Patent Classification (IPC):
***C09D 11/324*** *(2014.01)* ***C09D 11/322*** *(2014.01)*
***C09D 11/38*** *(2014.01)*

(52) Cooperative Patent Classification (CPC):
**C09D 11/322; C09D 11/324; C09D 11/38**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **27.08.2024 JP 2024145757**
**27.08.2024 JP 2024145758**
**18.07.2025 JP 2025121523**

(71) Applicant: **Canon Kabushiki Kaisha**
**Tokyo, 146-8501 (JP)**

(72) Inventors:
- **KIMURA, Kazuki**
  **Tokyo (JP)**
- **NAKAGAWA, Kouhei**
  **Tokyo (JP)**
- **SAITO, Takashi**
  **Tokyo (JP)**

(74) Representative: **WESER & Kollegen Patentanwälte PartmbB**
**Radeckestraße 43**
**81245 München (DE)**

(54) **AQUEOUS INK, INK CARTRIDGE AND INK JET RECORDING METHOD**

(57) The aqueous ink for ink jet includes a self-dispersible pigment in which functional groups are bonded to a surface of a particle of a pigment and include a first functional group represented by the formula (1) and a second functional group including at least one kind of group represented by the formula (2). A molar ratio of an anionic group amount of the first functional group to a total anionic group amount of the first functional group and the second functional group in the self-dispersible pigment is 0.20 times or more to 0.97 times or less. In the formula (2), two of $R^1$ to $R^5$ each represent $COOM^2$ and three thereof represent hydrogen atoms, and the two $COOM^2$s are adjacent to each other or are present at positions sandwiching one carbon atom for forming a benzene ring.

FIG. 1

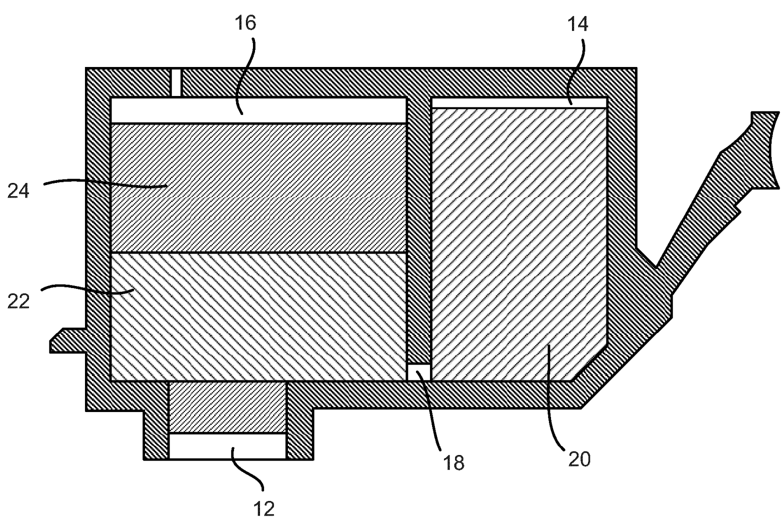


EP 4 703 444 A1

## Description

TECHNICAL FIELD

The present disclosure relates to an aqueous ink, an ink cartridge and an ink jet recording method.

BACKGROUND

The frequency at which an ink jet recording apparatus is utilized in an office has started to increase in recent years. In such applications, the achievement of a high level of image quality particularly on various kinds of plain paper out of recording media and the maintenance of an ejection characteristic at the time of long-term use of a recording apparatus are required.

To cope with those requirements, as a technology for the achievement of both of image quality and reliability, there is a proposal of an ink containing, as a coloring material, a self-dispersible pigment obtained by modifying a pigment through the bonding of an organic group to the surface of a particle of the pigment. In, for example, Japanese Patent Laid-Open No. 2009-506196, there is a proposal of a modified pigment having bonded thereto an organic group having a carboxylic acid group. In Japanese Patent Laid-Open No. 2009-515007, there is a proposal of an improvement in optical density of an image through use of a self-dispersible pigment for which a functional group having high reactivity with calcium is selected based on a calcium index number specifying an indicator of reactivity with calcium. In addition, in Japanese Patent Laid-Open No. 2013-253230, there is a proposal of an ink containing a self-dispersible pigment having bonded thereto a functional group including a phosphonic acid group, which is an ionic group that easily reacts with an inorganic salt in a recording medium, and a functional group including a carboxylic acid group or a sulfonic acid group, which is an ionic group that is easily ionized. It has been said that according to the proposal, an image having satisfactory color developability can be recorded, and the intermittent ejection stability of the ink can be improved.

With a view to achieving both of image quality and reliability, the inventors have used various self-dispersible pigments, in each of which an organic group is bonded to the surface of a pigment particle, to prepare aqueous inks for ink jet corresponding to the respective various self-dispersible pigments. The inventors have performed an image quality evaluation by using various kinds of plain paper as recording media. As a result, on some recording media, images each having high color developability have been recorded. In contrast, however, there have existed recording media on which images each having low color developability are recorded with a large part of the aqueous inks using the various self-dispersible pigments. Thus, the inventors have found that the level of the color developability is not sufficient.

In addition, there have existed aqueous inks using the self-dispersible pigments, the inks being capable of recording images each having sufficient color developability even on recording media on which images each having low color developability are recorded with part of the aqueous inks using the self-dispersible pigments. However, the inventors have found that some of the inks do not have sufficient levels of storage stability because the particle diameter of the pigment in each of the inks after the storage of the ink significantly increases as compared to the particle diameter of the pigment in the ink before the storage of the ink.

SUMMARY

Accordingly, the present disclosure is directed to provide an aqueous ink for ink jet using a self-dispersible pigment as a coloring material, the aqueous ink being capable of recording an image having satisfactory color developability and the aqueous ink having satisfactory storage stability. In addition, the present disclosure is also directed to provide an ink cartridge and an ink jet recording method each using the aqueous ink.

That is, according to the present disclosure, there can provided an aqueous ink including a self-dispersible pigment, wherein the self-dispersible pigment is a self-dispersible pigment in which functional groups are bonded to a surface of a particle of a pigment, wherein the functional groups include a first functional group represented by the following general formula (1) and a second functional group including at least one kind of group represented by the following general formula (2), and wherein a molar ratio of an anionic group amount (mmol/g) of the first functional group to a total anionic group amount (mmol/g) of the first functional group and the second functional group in the self-dispersible pigment is 0.20 times or more to 0.97 times or less:

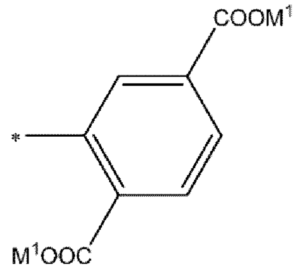

(1)

in the general formula (1), $M^1$s each independently represent a hydrogen atom, an alkali metal, ammonium or an organic ammonium, and * represents a bonding position to the surface of the particle of the pigment;

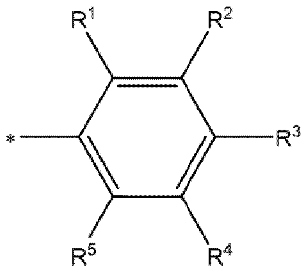

(2)

in the general formula (2), two of $R^1$ to $R^5$ each represent $COOM^2$ and three thereof represent hydrogen atoms, and the two $COOM^2$s are adjacent to each other or are present at positions sandwiching one carbon atom for forming a benzene ring, $M^2$s each independently represent a hydrogen atom, an alkali metal, ammonium or an organic ammonium, and * represents a bonding position to the surface of the particle of the pigment.

According to the present disclosure, there can be provided the aqueous ink using a self-dispersible pigment as a coloring material, the aqueous ink being capable of recording an image having satisfactory color developability and the aqueous ink having satisfactory storage stability. In addition, according to the present disclosure, there can be provided the ink cartridge and the ink jet recording method each using the aqueous ink.

Features of the present disclosure will become apparent from the following description of embodiments with reference to the attached drawings. The following description of embodiments is described by way of example.

BRIEF DESCRIPTION OF THE DRAWINGS

Fig. 1 is a sectional view for schematically illustrating an ink cartridge according to one embodiment of the present disclosure.
Fig. 2A and Fig. 2B are each a view for schematically illustrating an example of an ink jet recording apparatus to be used in an ink jet recording method of the present disclosure, in which Fig. 2A is a perspective view of the main portion of the ink jet recording apparatus and Fig. 2B is a perspective view of a head cartridge.
Fig. 3 is a schematic view for illustrating an example of the cleaning portion of the ink jet recording apparatus.

DESCRIPTION OF THE EMBODIMENTS

The present disclosure is described in more detail below by way of exemplary embodiments. In the present disclosure, when a compound is a salt, the salt is present in a state of dissociating into ions in an ink, but the expression "contains the salt" is used for convenience. In addition, an aqueous ink for ink jet is sometimes simply described as "ink". Physical property values are values at normal temperature (25°C) and normal pressure (1 atm) unless otherwise stated. In addition, the unit "mmol/kg" in the present disclosure is calculated by defining the specific gravity of the ink as "1 g/mL".

When one and the same aqueous ink is used, a recording medium having recorded thereon an image having low color developability has, for example, the following characteristics: as compared to a recording medium having recorded thereon an image having high color developability, the permeation rate of the ink is high and the abundance of an inorganic salt causing the aggregation of a pigment such as calcium is small. In such recording medium, many of the related-art self-dispersible pigments in each of which an organic group is bonded to the surface of a pigment particle, the pigments being typified by the self-dispersible pigment described in Japanese Patent Laid-Open No. 2009-515007, are each liable to sink into the recording medium before its aggregation on the surface of the recording medium or in the vicinity thereof after the

application of an ink to the recording medium. Accordingly, the amount of the pigment present on the surface of the recording medium and in the vicinity thereof is small. In addition, the pigment sinks into the recording medium to reduce the color developability of an image.

As the related art for an improvement in color developability of an image in such a recording medium as described above, there is available a method including aggregating a pigment before its sinking into the recording medium to cause the pigment to remain on the surface of the recording medium or in the vicinity thereof. The design of ink formulation that accelerates the aggregation of the pigment at the time of the evaporation of a liquid component in an ink is effective for the method. In such design, however, at the time of long-term use of an inkjet recording apparatus, the pigment may aggregate owing to an interaction between the particles of the pigment to increase the particle diameter of the pigment, thereby reducing the storage stability of the ink. Accordingly, it has been difficult for the related art to achieve both the color developability of an image and the storage stability of the ink.

In addition, as described in each of Japanese Patent Laid-Open No. 2009-515007 and Japanese Patent Laid-Open No. 2013-253230, the following method is available: an ink containing a self-dispersible pigment having bonded thereto a functional group including a specific ionic group is used; and the pigment is caused to remain on the surface of a recording medium or in the vicinity thereof by being aggregated through a reaction between an inorganic salt in the recording medium and the ionic group. However, the inventors have found that even when an ink containing such self-dispersible pigment is used, an image to be recorded is poor in color developability in a recording medium, into which the ink is liable to permeate and which has a small inorganic salt content.

With a view to improving the color developability of an image without impairing the storage stability of an ink, the inventors have made an investigation on a technology for efficiently causing a pigment to remain on the surface of a recording medium without use of any approach to accelerating the aggregation of the pigment at the time of the evaporation of a liquid component in the ink. As a result, the inventors have conceived that it is effective to cause the pigment to adsorb to cellulose serving as a constituent component for the recording medium through an interaction occurring between the pigment and the cellulose. Based on the technical idea, the inventors have produced and investigated a self-dispersible pigment in which various surface functional groups are bonded to the surface of a pigment particle.

As a result, the inventors have found that a self-dispersible pigment in which a functional group represented by the general formula (1) is bonded to the surface of a pigment particle is improved in adsorptivity to cellulose, and hence even in a recording medium on which an image having low color developability is recorded because the permeation of an ink thereinto is fast, the pigment can improve the color developability of the image. However, even when the self-dispersible pigment is used, the storage stability of the ink at the time of long-term use of an ink jet recording apparatus has been low in some cases.

In view of the foregoing, the inventors have made an investigation on a self-dispersible pigment in which a second functional group including at least one kind of group represented by the general formula (2) is bonded to the surface of a pigment particle in addition to the first functional group represented by the general formula (1). Then, the inventors have found that both the color developability of an image and the storage stability of an ink can be achieved by setting the molar ratio of the anionic group amount of the first functional group to the total anionic group amount of the first functional group and the second functional group in the self-dispersible pigment to 0.20 times or more to 0.97 times or less. The anionic group amount (mmol/g) of each of the first functional group and the second functional group is the number of millimoles (mmol) of an anionic group per unit mass (g) of the pigment. The inventors have assumed the reason why an aqueous ink including the above-mentioned specific self-dispersible pigment can achieve both the color developability of an image and the storage stability of the ink to be as described below.

First, the color developability is described. A self-dispersible pigment in which the first functional group represented by the general formula (1) is bonded to the surface of a pigment particle is assumed to have a specific interaction with cellulose because it is recognized that the pigment is improved in adsorptivity to the cellulose as compared to a self-dispersible pigment having any other surface functional group. An interaction involved in adsorption between the self-dispersible pigment and the cellulose comes in the following two kinds: an interaction between the surface of the particle of the pigment and the cellulose; and an interaction between a surface functional group and the cellulose. A hydrophobic interaction and a hydrophilic interaction may each act between the former pair or the latter pair. The cellulose has a structure in which hydroxy groups serving as hydrophilic groups are arranged at both the terminals of the main chain of a glucopyranose ring. The first functional group represented by the general formula (1) has a structure in which two carboxylic acid groups serving as hydrophilic groups are positioned at para positions to each other with respect to its benzene ring. The structure of the functional group represented by the general formula (1) has such a positional relationship between substituents that each of: a hydrophobic interaction between the glucopyranose ring of the cellulose and the benzene ring; and a hydrogen bond between a hydroxy group of the cellulose and a carboxylic acid group efficiently occurs as compared to the general formula (2). With such structure, an interaction resulting from each of the hydrophobic interaction and the hydrogen bond is assumed to specifically occur to improve the adsorptivity of the self-dispersible pigment to the cellulose.

However, an ink including a self-dispersible pigment in which only the first functional group represented by the general formula (1) out of the first functional group and the second functional group including at least one kind of group represented by the general formula (2) is bonded to the surface of a pigment particle has involved the following problem. That is, after an acceleration test at high temperatures supposing a situation in which an ink jet recording apparatus is used over a long time period, the pigment has aggregated in some cases. In contrast, the inventors have found that the following only needs to be performed for solving the problem: the first functional group and the second functional group are bonded to the surface of a pigment particle; and the molar ratio of the anionic group amount of the first functional group to the total anionic group amount of the above-mentioned functional groups is set to 0.20 times or more to 0.97 times or less. The satisfaction of such configuration has been able to improve the storage stability of the ink without impairing the color developability of an image.

To keep the dispersed state of a pigment stable, it is important that an electrostatic repulsive force sufficiently act between its particles. In the first functional group represented by the general formula (1), two carboxylic acid groups are bonded to its benzene ring while sandwiching two carbon atoms out of carbon atoms for forming the benzene ring, and are hence positioned at para positions to each other with respect to the benzene ring. Meanwhile, in the group represented by the general formula (2), two carboxylic acid groups bonded to its benzene ring are adjacent to each other or are bonded to the benzene ring while sandwiching one carbon atom out of carbon atoms for forming the benzene ring. Thus, the groups are positioned at ortho positions or meta positions to each other with respect to the benzene ring. Accordingly, the group represented by the general formula (2) has a structure in which a distance between carboxylic acid-derived charges is short and hence the charges are localized as compared to the first functional group represented by the general formula (1). Because of the difference in structure, in the case of the ink including the self-dispersible pigment in which both the first functional group and the second functional group are bonded to the surface of the pigment particle, the localized charges are assumed to cause an electrostatic repulsive force to effectively act between the pigment particles to improve its storage stability.

Meanwhile, an ink including both the following self-dispersible pigments cannot achieve both the color developability of an image and the storage stability of the ink: a self-dispersible pigment that has the first functional group and is free of the second functional group; and a self-dispersible pigment that has the second functional group and is free of the first functional group. A reason therefor is assumed to be as described below. An electrostatic repulsive force between the particles of the self-dispersible pigment free of the second functional group in the ink is weak. Accordingly, at the time of long-term use of an ink jet recording apparatus, the pigment aggregates owing to an interaction between the pigment particles to increase the particle diameter of the pigment, and hence the storage stability of the ink is not obtained. In addition, as described above, the interaction of the self-dispersible pigment free of the first functional group with cellulose in a recording medium is weak, and hence the pigment is liable to sink into the recording medium before its aggregation. Accordingly, the color developability of the image is not obtained. In other words, the self-dispersible pigment in which both the first functional group and the second functional group are bonded to the surface of the pigment particle needs to be used.

In addition, in the self-dispersible pigment in which both the first functional group and the second functional group are bonded to the surface of the pigment particle, the molar ratio of the anionic group amount of the first functional group to the total anionic group amount of the first functional group and the second functional group is set to 0.20 times or more. Thus, adsorptivity between the pigment and cellulose can be effectively improved. As a result, the color developability of an image can be improved. In addition, when the above-mentioned molar ratio is set to 0.97 times or less, an electrostatic repulsive force can effectively act between the pigment particles to improve the storage stability of the ink.

As described above, in the present disclosure, when a ratio between the above-mentioned respective functional groups in the self-dispersible pigment is controlled based on the characteristics of the functional groups, while the adsorptivity of the pigment to cellulose and color developability in a recording medium having recorded thereon an image having low color developability are improved, the storage stability of the ink can be achieved.

<Aqueous Ink>

An aqueous ink of the present disclosure is an aqueous ink for ink jet including a self-dispersible pigment. The self-dispersible pigment is a self-dispersible pigment in which specific functional groups are bonded to the surface of the particle of a pigment. The ink of the present disclosure does not need to be a so-called "curable ink." Accordingly, the ink of the present disclosure may be free of a compound such as a polymerizable monomer that may be polymerized by the addition of external energy. Respective components for forming the ink of the present disclosure and the physical properties of the ink are described in detail below.

(Self-dispersible Pigment)

The ink includes, as a coloring material, the self-dispersible pigment in which the functional groups are bonded to

the surface of the particle of the pigment. The functional groups in the self-dispersible pigment include a first functional group represented by the following general formula (1) and a second functional group including at least one kind of group represented by the following general formula (2). The ink may include one kind of the self-dispersible pigments, in each of which the first functional group and the second functional group are bonded to the surface of the particle of the pigment, alone, or may include two or more kinds thereof. In addition, in the self-dispersible pigment, one kind of the first functional groups may be bonded to the surface of the particle of the pigment as in the second functional group, or two or more kinds thereof different from each other in $M^1$s in the general formula (1) may be bonded thereto. The content (% by mass) of the self-dispersible pigment in the ink is preferably 0.10% by mass or more to 15.00% by mass or less, more preferably 1.00% by mass or more to 10.00% by mass or less with respect to the total mass of the ink.

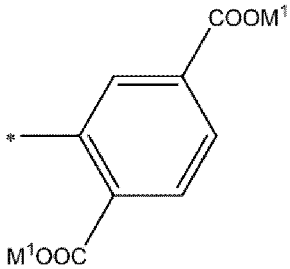
(1)

In the general formula (1), $M^1$s each independently represent a hydrogen atom, an alkali metal, ammonium or an organic ammonium, and * represents a bonding position to the surface of the particle of the pigment.

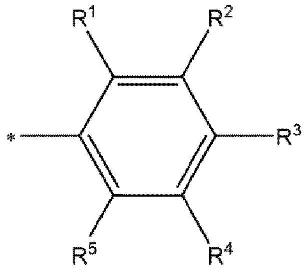
(2)

In the general formula (2), two of $R^1$ to $R^5$ each represent $COOM^2$ and three thereof represent hydrogen atoms, and the two $COOM^2$s are adjacent to each other or are present at positions sandwiching one carbon atom for forming a benzene ring, $M^2$s each independently represent a hydrogen atom, an alkali metal, ammonium or an organic ammonium, and * represents a bonding position to the surface of the particle of the pigment.

[Functional Group]

The carboxylic acid groups represented by $COOM^1$ and $COOM^2$ in the general formulae (1) and (2), respectively are each one kind of anionic group, and at least part of the groups may each form a salt. When the carboxylic acid groups each form a salt, at least one proton of each of the groups is substituted with a cation. Examples of the cation may include an alkali metal ion, an ammonium ion and an organic ammonium ion. Examples of the alkali metal ion may include ions of lithium, sodium and potassium. Examples of the organic ammonium ion may include cations of: aliphatic amines, such as mono to trialkylamines; and aliphatic alkanolamines, such as mono- to trialkanolamines, and salts thereof. The anionic group is particularly preferably an alkali metal salt form, such as a sodium salt or a potassium salt, or an ammonium salt form.

In the general formula (2), two of $R^1$, $R^2$, $R^3$, $R^4$ and $R^5$ each represent $COOM^2$, and three thereof represent hydrogen atoms. In addition, the two $COOM^2$s out of $R^1$ to $R^5$ are adjacent to each other or are present at positions sandwiching one carbon atom for forming the benzene ring. In other words, the two $COOM^2$s are positioned at ortho positions or meta positions to each other with respect to the benzene ring. In addition, when the bonding position (* in the general formula (2)) to the surface of the particle of the pigment is defined as 1-position, the bonding positions of the two $COOM^2$s in the benzene ring may be 2-position and 3-position, 3-position and 4-position, 2-position and 4-position or 3-position and 5-position.

The second functional group including at least one kind of group represented by the general formula (2) preferably includes a group represented by the following general formula (3). When a self-dispersible pigment in which the first functional group and the group represented by the following general formula (3) are bonded to the surface of a pigment particle is used, the storage stability of the ink becomes more satisfactory. In the general formula (3), two

carboxylic acid groups ($COOM^2$) bonded to its benzene ring are adjacent to each other. Thus, a structure in which a distance between carboxylic acid-derived charges is short and hence the charges are localized is established. In addition, the localized charges easily contribute to electrostatic repulsion because the two carboxylic acid groups are arranged so as to face outward with respect to the surface of the pigment particle. As a result, in the group represented by the general formula (3), the electrostatic repulsion acts more effectively between the pigment particles as compared to any other group represented by the general formula (2). Accordingly, the ink is assumed to be excellent in storage stability.

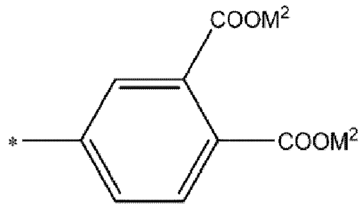 (3)

In the general formula (3), $M^2$s each independently represent a hydrogen atom, an alkali metal, ammonium or an organic ammonium.

In a self-dispersible pigment in which functional groups including the above-mentioned first functional group and second functional group are bonded to the surface of a pigment particle, the molar ratio of the anionic group amount of the first functional group to the total anionic group amount of the first functional group and the second functional group is 0.20 times or more to 0.97 times or less. The above-mentioned molar ratio is preferably 0.40 times or more to 0.97 times or less from the following viewpoint: an interaction between the first functional group represented by the general formula (1) and cellulose serving as a constituent component for a recording medium occurs more effectively, and hence the color developability of an image can be further improved.

The anionic group amount (mmol/g) of the first functional group is preferably 0.010 mmol/g or more to 0.200 mmol/g or less. In addition, the anionic group amount (mmol/g) of the second functional group is preferably 0.005 mmol/g or more to 0.150 mmol/g or less. The anionic group amount of a functional group of the self-dispersible pigment means the amount (mol) of an anionic group in the functional group per unit mass of the self-dispersible pigment.

The anionic group amount of each of the first functional group and the second functional group may be measured by analyzing the structure of an atomic group bonded to the surface of the particle of the pigment for forming the self-dispersible pigment through pyrolysis gas chromatography-mass spectrometry (pyrolysis GC/MS). Specifically, the measurement is performed by using, as a reference standard, a self-dispersible pigment having only one functional group to be subjected to determination out of the two kinds of functional groups, followed by the calculation of the anionic group amount of each of the functional groups. In Examples to be described later, the amount was calculated from a mass at the time point when the temperature of a sample reached 400°C through its heating with a gravimetric analyzer (product name: "TGA 550", manufactured by TA Instruments) in the range of from 30°C to 600°C under a temperature increase condition of 2°C/min. The anionic group amount of each of the first functional group and the second functional group may also be measured through use of the self-dispersible pigment extracted from the ink by an appropriate method. At the time of the preparation of the sample, purification, such as the washing of the self-dispersible pigment or the centrifugation of the sample (pigment dispersion liquid), is preferably performed so that the anionic group amount of each of the first functional group and the second functional group may be measured with high accuracy as a result of the removal of impurities and the like.

The total anionic group amount (mmol/g) of the first functional group and the second functional group is preferably 0.08 mmol/g or more. When the total anionic group amount (mmol/g) is 0.08 mmol/g or more, the functional groups of the pigment are sufficiently present and hence the effect of electrostatic repulsion between its particles derived from the anionic groups in the functional groups is sufficient. Accordingly, the storage stability of the ink is further improved with ease. In addition, the total anionic group amount (mmol/g) is more preferably 0.20 mmol/g or less. In the case where the total anionic group amount is 0.20 mmol/g or less, the anionic group amount of the pigment is suppressed to a moderate level. In this case, the hydrophilicity of the pigment is moderately suppressed and hence its affinity for a liquid component in the ink is also moderately suppressed. Accordingly, after the application of the ink to a recording medium, adsorption is caused by an interaction between the pigment and cellulose on the surface of the recording medium in a relatively easy manner. Thus, the color developability of an image is further improved with ease. The total anionic group amount of the first functional group and the second functional group means the total anionic group amount of the first functional group and the second functional group per unit mass of the self-dispersible pigment, and may be adjusted by the amounts of the first functional group and the second functional group bonded to the surface of the particle of the pigment. Although the pigment before the performance of treatment for bonding the respective functional groups may have an extremely small amount of an anionic group, the amount is negligible.

The total anionic group amount of the first functional group and the second functional group bonded to the surface

of the particle of the pigment may be measured as the surface charge amount of the self-dispersible pigment. The surface charge amount may be measured by colloidal titration utilizing a potential difference. A larger value of the surface charge amount means a larger anionic group amount and a smaller value thereof means a smaller anionic group amount. The anionic group amount (mmol/g) of the self-dispersible pigment is an amount (mmol) per 1 g of the solid content of the self-dispersible pigment. In Examples to be described later, the anionic group amount of a self-dispersible pigment in a pigment dispersion liquid was measured through use of a potential difference automatic titration apparatus (product name: "AT-510", manufactured by Kyoto Electronics Manufacturing Co., Ltd.) mounted with a flow potential titration unit (PCD-500) by colloidal titration utilizing a potential difference. Methyl glycol chitosan was used as a titration reagent. The anionic group amount may be measured through use of the self-dispersible pigment extracted from the ink by an appropriate method. At the time of the preparation of a sample, preliminary preparation, such as the washing of the self-dispersible pigment or the centrifugation of the sample (pigment dispersion liquid), is preferably performed so that the anionic group amount of each of the functional groups may be measured with high accuracy as a result of the removal of impurities and the like. Although the pigment before the performance of the treatment for bonding the respective functional groups may have an extremely small amount of an anionic group, the amount is negligible. Although the total anionic group amount of the first functional group and the second functional group may be measured by the above-mentioned pyrolysis GC/MS, the colloidal titration is preferable because the titration does not require any reference standard and hence enables simple measurement.

[Kind of Pigment and Physical Property Values]

As the pigment for forming the self-dispersible pigment, there may be used, for example: an inorganic pigment, such as carbon black, calcium carbonate or titanium oxide; or an organic pigment, such as azo, phthalocyanine, quinacridone, isoindolinone, imidazolone, diketopyrrolopyrrole or dioxazine. Those pigments may be used alone or in combination thereof. In addition, a dye or the like may be further used in combination in addition to the pigment for the purpose of, for example, toning its color. Of the pigments, carbon black is preferably used. Examples of the carbon black may include furnace black, lamp black, acetylene black and channel black. Those carbon blacks may be used alone or in combination thereof.

The DBP oil absorption of the carbon black is preferably 50 mL/100 g or more to 200 mL/100 g or less. In particular, the DBP oil absorption is more preferably 120 mL/100 g or more to 170 mL/100 g or less, particularly preferably 120 mL/100 g or more to 150 mL/100 g or less. The DBP oil absorption of the carbon black may be measured by a method in conformity with JIS K6221 or ASTM D-2414. Those methods are each a method including: dropping dibutyl phthalate into 100 g of the carbon black under stirring; and measuring the addition amount of dibutyl phthalate at the time point when torque becomes maximum.

The specific surface area of the carbon black based on a BET method is preferably 100 $m^2$/g or more to 600 $m^2$/g or less. The specific surface area of the carbon black based on the BET method may be measured by a method in conformity with, for example, JIS K6217 or ASTM D-6556. Those methods are each a method including: immersing the carbon black that has been deaerated in liquid nitrogen; and measuring the amount of nitrogen adsorbing to the surface of the particle of the carbon black when equilibrium is reached. The specific surface area of the carbon black based on the BET method is more preferably 200 $m^2$/g or more. When carbon black having a specific surface area based on the BET method of 200 $m^2$/g or more is selected, such a surface area that the self-dispersible pigment can effectively adsorb to cellulose can be secured, and hence the color developability of an image is further improved.

The primary particle diameter of the carbon black is preferably 10 nm or more to 40 nm or less. The carbon black is typically present under the state of a secondary particle in which a plurality of primary particles three-dimensionally stretch like a bunch of grapes. The primary particle diameter means the particle diameter of the carbon black (primary particle) serving as the minimum unit for forming one secondary particle. The primary particle diameter of the carbon black may be determined as an arithmetic average obtained by: observing about 100 primary particles of the carbon black each serving as the minimum unit for forming the secondary particle with a transmission or scanning electron microscope; and measuring their particle diameters, followed by their averaging.

The average particle diameter of the carbon black is preferably 50 nm or more to 200 nm or less. The average particle diameter of the carbon black means the particle diameter of the carbon black in a form in which the carbon black typically exists, that is, as a secondary particle. The average particle diameter of the carbon black may be measured as a 50% cumulative value [$D_{50}$ (nm)] in a volume-based particle diameter distribution with, for example, a particle size distribution-measuring apparatus of a dynamic light scattering system.

When the particle diameter of the pigment is extremely large or when the particle diameter is extremely small, the measurement of the surface charge amount thereof by colloidal titration to be described later may be affected by the particle diameter. To obtain the ejection characteristic of the ink of the present disclosure serving as an ink for ink jet at a high level while improving measurement accuracy, the average particle diameter ($D_{50}$) of the pigment is preferably 60 nm or more to 180 nm or less. In addition, the 90% cumulative value of the pigment in a volume-based particle diameter

distribution ($D_{90}$) is preferably 100 nm or more to 320 nm or less.

[Method of producing Self-dispersible Pigment]

Methods of producing self-dispersible pigments are roughly classified into an oxidation type and a surface modification type. A production method of a surface modification type by which the chemical structure and amount of a surface functional group can be controlled is selected for a self-dispersible pigment to be used in an aqueous ink. A production method of a surface modification type may be, for example, a method including chemically treating a pigment through use of, for example, a compound that may produce a diazonium salt, an azo compound, a diazene compound or a triazine compound as a treatment agent.

The method of producing a self-dispersible pigment comes in the following kinds: a method including bonding the first functional group and the second functional group to the surface of the particle of the pigment in a stepwise manner; and a method including bonding the first functional group and the second functional group thereto in tandem. The self-dispersible pigment may be obtained by each of the production methods. In the method including bonding the first functional group and the second functional group to the surface of the particle of the pigment in a stepwise manner, the following steps are preferably performed in a stepwise manner: a step of treating the surface of the pigment with a first treatment agent having the first functional group; and a step of treating the surface of the pigment with a second treatment agent having the second functional group. In the method including bonding the first functional group and the second functional group in tandem, a step of treating the surface of the pigment through combined use of the above-mentioned first treatment agent and second treatment agent is preferably performed. In the present disclosure, the self-dispersible pigment is preferably produced by performing steps for bonding the respective functional groups in a stepwise manner. In particular, the self-dispersible pigment is preferably produced by performing the following steps in a stepwise manner: the step of treating the surface of the pigment with the first treatment agent having the first functional group; and the step of treating the surface of the pigment with the second treatment agent having the second functional group.

(Compound represented by General Formula (4))

The ink preferably includes a compound represented by the following general formula (4). In this case, the ink may include one or two or more kinds of the compounds each represented by the general formula (4). The content C (mmol/kg) of the compound represented by the general formula (4) in the ink is preferably 0.01 mmol/kg or more to 15.00 mmol/kg or less. The above-mentioned content C (mmol/kg) is more preferably 0.02 mmol/kg or more to 14.00 mmol/kg or less, still more preferably 0.05 mmol/kg or more to 13.50 mmol/kg or less.

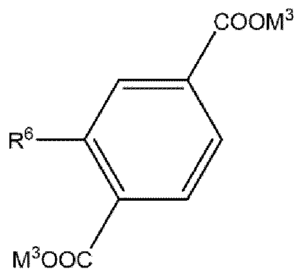

(4)

In the general formula (4), $R^6$ represents a hydroxy group or a nitro group, and $M^3$s each independently represent a hydrogen atom, an alkali metal, ammonium or an organic ammonium.

Examples of the alkali metal may include lithium, sodium and potassium. Examples of the organic ammonium may include: alkylamines each having 1 or more to 3 or less carbon atoms, such as methylamine and ethylamine; and mono-, di- or trialkanolamines each having 1 or more to 4 or less carbon atoms, such as monoethanolamine, diethanolamine, triethanolamine, monoisopropanolamine, diisopropanolamine and triisopropanolamine. $M^3$ particularly preferably represents an acid form, an alkali metal salt form, such as a sodium salt or a potassium salt, or an ammonium salt form.

When the compound represented by the general formula (4) is incorporated into the ink including the self-dispersible pigment in which the above-mentioned first functional group and second functional group are bonded to the surface of the particle of the pigment, an image having higher color developability can be recorded. The compound represented by the general formula (4) has a structure in which its benzene ring and carboxylic acid groups are present at such substituent positions that each of: a hydrophobic interaction between a surface functional group of the self-dispersible pigment and cellulose; and a hydrogen bond therebetween efficiently occurs. Accordingly, even when the self-dispersible pigment and the cellulose are present in the ink while being distant from each other by such a distance that

no hydrophobic interaction can be directly formed therebetween, the compound represented by the general formula (4) may form an interaction with each of the self-dispersible pigment and the cellulose. Accordingly, it is assumed that the self-dispersible pigment can interact with the cellulose to efficiently adsorb thereto.

From the viewpoint of the above-mentioned color developability, the content of the compound represented by the general formula (4) in the ink is preferably determined in relation to the content of the pigment. An investigation made by the inventors has found that the content C (mmol/kg) of the compound represented by the general formula (4) and the content P (% by mass) of the above-mentioned self-dispersible pigment in the aqueous ink preferably satisfy a relationship represented by the following formula (5) from the viewpoints of the color developability and the storage stability of the ink.

$$0.010 \leq C\ (mmol/kg)/P\ (\%\ by\ mass) \leq 3.000 \quad (5)$$

When the value of the ratio "C (mmol/kg)/P (% by mass)" is 0.010 or more, a color developability-improving effect is further improved with ease because the amount of the compound represented by the general formula (4) with respect to the self-dispersible pigment becomes sufficient. Meanwhile, when the value of the ratio "C (mmol/kg)/P (% by mass)" is 3.000 or less, the storage stability of the ink is further improved with ease. This is assumed to be because of the following factor: since an ion concentration is moderately suppressed by the compound represented by the general formula (4), an electric double layer formed by an anionic group of the self-dispersible pigment is hardly compressed, and hence the dispersed state of the pigment is kept stable with ease.

From the viewpoint of achieving both the color developability of an image and the storage stability of the ink, the value of the above-mentioned ratio "C (mmol/kg)/P (% by mass)" is more preferably set to 0.030 or more to 2.000 or less. That is, the content C (mmol/kg) of the compound represented by the general formula (4) and the content P (% by mass) of the self-dispersible pigment in the ink more preferably satisfy a relationship represented by the following formula (6).

$$0.030 \leq C\ (mmol/kg)/P\ (\%\ by\ mass) \leq 2.000 \quad (6)$$

(Resin)

A resin may be incorporated into the ink. Examples of the resin may include an acrylic resin, a urethane-based resin and an olefin-based resin. Examples of the form of the resin may include a block copolymer, a random copolymer, a graft copolymer and a combination thereof. In addition, the resin may be a water-soluble resin that may be dissolved in an aqueous medium or a resin particle that is dispersed in an aqueous medium. The resins may be used alone or in combination thereof. The content (% by mass) of the resin in the ink is preferably 0.10% by mass or more to 20.00% by mass or less, more preferably 0.50% by mass or more to 15.00% by mass or less with respect to the total mass of the ink.

(Aqueous Medium)

An aqueous medium, which is water or a mixed solvent of water and a water-soluble organic solvent, may be incorporated into the ink. Deionized water or ion-exchanged water is preferably used as the water. The content (% by mass) of the water in the ink is preferably 10.00% by mass or more to 95.00% by mass or less, more preferably 50.00% by mass or more to 95.00% by mass or less with respect to the total mass of the ink. In addition, the content (% by mass) of the water-soluble organic solvent in the ink is preferably 3.00% by mass or more to 50.00% by mass or less, more preferably 3.00% by mass or more to 40.00% by mass or less with respect to the total mass of the ink. Solvents that may be used in inks for ink jet, such as alcohols, (poly)alkylene glycols, glycol ethers, nitrogen-containing compounds and sulfur-containing compounds, may each be used as the water-soluble organic solvent. Those water-soluble organic solvents may be used alone or in combination thereof.

Of the water-soluble organic solvents, a first water-soluble organic solvent, which has a LogP value at a temperature of 25°C of -0.77 or less and a vapor pressure at 25°C of 1.9 Pa or more, and has, in its main chain, a chain hydrocarbon group having 2 or more to 4 or less carbon atoms, is preferably used. The use of the first water-soluble organic solvent can further improve the color developability of an image. Although the term "water-soluble organic solvent" typically refers to a liquid, in the present disclosure, a solvent that is a solid at a temperature of 25°C is included in the water-soluble organic solvents. Specific examples of the water-soluble organic solvent that is a solid at 25°C, the solvent being widely used in inks, may include 1,6-hexanediol, trimethylolpropane, ethylene urea, urea and a polyethylene glycol having a number-average molecular weight of 1,000.

First, a Log Pow (LogP) value serving as an indicator indicating the polarity of a water-soluble organic solvent is described. The LogP value of the water-soluble organic solvent in the present disclosure is a value at 25°C. The LogP value refers to a partition coefficient between water and octanol (1-octanol). The LogP value is a physical property value related to the ease with which a substance of interest conforms to water, and as the value becomes smaller, the polarity of the

substance becomes higher. The LogP value is calculated from the relational equation "$LogP=Log_{10}C_o/C_w$" ($C_o$ represents the concentration of the substance of interest in an octanol phase and $C_w$ represents the concentration of the substance of interest in a water phase). The LogP value may be experimentally determined by a method described in JIS Z 7260-107. In addition, the value may be determined by utilizing commercial calculation software such as software available under the product name "ACD/PhysChem Suite" (manufactured by ACD/Labs). In Examples to be described later, a value determined with software available under the product name "ACD/PhysChem Suite Version 12.00" (manufactured by ACD/Labs) was adopted. The water-soluble organic solvent to be incorporated into the ink is preferably a solvent having a vapor pressure at a temperature of 25°C lower than that of water.

Specific examples of the water-soluble organic solvent may include the following solvents (numerical values in parentheses represent their LogP values at a temperature of 25°C). That is, the examples include a polyethylene glycol having a number-average molecular weight of 1,000 (-6.35), a polyethylene glycol having a number-average molecular weight of 400 (-2.82), a polyethylene glycol having a number-average molecular weight of 200 (-1.88), tetraethylene glycol (-1.88), bishydroxyethylsulfone (-1.86), glycerin (-1.85), urea (-1.66), triethylene glycol (-1.65), diethylene glycol (-1.41), 1,2,6-hexanetriol (-1.39), ethylene glycol (-1.36), ethylene urea (-1.24), 1,3-propanediol (-1.09), 2-pyrrolidone (-1.09), 1,2-propanediol (-1.01), trimethylolpropane (-0.97), 1,4-butanediol (-0.77), 1,3-butanediol (-0.74), triethylene glycol dimethyl ether (-0.68), triethylene glycol monoethyl ether (-0.66), N-methyl-2-pyrrolidone (-0.64), γ-butyrolactone (-0.63), δ-valerolactam (-0.57), 1,5-pentanediol (-0.56), 1,2-butanediol (-0.50), 3-methyl-1,5-pentanediol (-0.21), δ-valerolactone (-0.10), 1,6-hexanediol (-0.05), isopropanol (0.18), triethylene glycol monobutyl ether (0.36), 1,2-hexanediol (0.52), ethylene glycol monobutyl ether (0.83), 1-pentanol (1.35), 1,2-octanediol (1.54) and tripropylene glycol monobutyl ether (1.66).

Next, the vapor pressure is described. The vapor pressure of the water-soluble organic solvent in the present disclosure is a value at 25°C. A value described in a book, such as "Solvent Pocketbook" (Ohmsha, Ltd.), may be utilized as the value of the vapor pressure. In addition, the vapor pressure may be determined by converting temperature-vapor pressure data described in "Handbook of Chemistry: Pure Chemistry, Revised Third Edition" (Maruzen) into a vapor pressure at 25°C based on the relationship "$InP=-\Delta Hvap/RT+C$" derived from the Clapeyron-Clausius equation. In the equation, P represents a vapor pressure, ΔHvap represents molar heat of evaporation (constant), R represents a gas constant, T represents a temperature, and C represents a constant. In addition, the vapor pressure may be determined by utilizing commercial calculation software such as "Advanced Chemistry Development (ACD/Labs) Software V11.02 (c1994-2023 ACD/Labs)." In Examples to be described later, a value determined with "Advanced Chemistry Development (ACD/Labs) Software V11.02 (c1994-2023 ACD/Labs)" was adopted.

Specific examples of the water-soluble organic solvent having a vapor pressure at 25°C of 1.9 Pa or more may include the following solvents (numerical values in parentheses represent their vapor pressures at 25°C (unit: Pa)). That is, the examples include diethylene glycol ethyl methyl ether (292.0), 3-methoxy-1-butanol (98.4), 3-methoxy-3-methylbutanol (90.0), 1-methyl-2-pyrrolidone (39.9), triethylene glycol dimethyl ether (28.0), 1,2-propanediol (27.2), 1,2-butanediol (19.7), ethylene glycol (12.8), diethylene glycol monoethyl ether (9.8), 1,2-pentanediol (7.7), 1,3-propanediol (4.6), 1,3-butanediol (7.2), 2-pyrrolidone (3.9), 2-methyl-1,3-propanediol (3.0), 1,2-hexanediol (2.6), 1,4-butanediol (1.9) and 3-methyl-1,5-pentanediol (1.9).

In addition, specific examples of the water-soluble organic solvent having a vapor pressure at 25°C of less than 1.9 Pa may include the following solvents (numerical values in parentheses represent their vapor pressures at 25°C (unit: Pa)). That is, the examples include diethylene glycol monobutyl ether (1.7), 1,5-pentanediol (1.0), 1,6-hexanediol (0.9), diethylene glycol (0.6), triethylene glycol (0.04), glycerin (0.03), trimethylolpropane, 1-(2-hydroxyethyl)-2-pyrrolidone, ethylene urea, tetraethylene glycol, a polyethylene glycol having a number-average molecular weight of from 200 to 1,000 and an ethylene oxide adduct of glycerin available under the product name "Liponic EG-07" (manufactured by Vantage).

The first water-soluble organic solvent has a LogP value at 25°C of -0.77 or less and a vapor pressure at 25°C of 1.9 Pa or more, and has, in its main chain, the chain hydrocarbon group having 2 or more to 4 or less carbon atoms. A chain hydrocarbon in the chain hydrocarbon group having 2 or more to 4 or less carbon atoms may be, for example, ethane, propane or butane. The chain hydrocarbon group having 2 or more to 4 or less carbon atoms is preferably a divalent chain hydrocarbon group. Of those, an ethylene group ($-CH_2CH_2-$), a trimethylene group ($-CH_2CH_2CH_2-$), a propylene group ($-CH(CH_3)CH_2-$) or a tetramethylene group ($-CH_2CH_2CH_2CH_2-$) is more preferable. The first water-soluble organic solvent has a structure in which any one of those chain hydrocarbon groups is used as a main chain and part of the group is substituted with, for example, a hydroxy group serving as a hydrophilic group.

Examples of the first water-soluble organic solvent may include ethylene glycol, 1,3-propanediol, 1,2-propanediol and 1,4-butanediol. Of those, at least one kind selected from the group consisting of: 1,3-propanediol; 1,2-propanediol; and 1,4-butanediol is preferable. The first water-soluble organic solvents may be used alone or in combination thereof.

The content (% by mass) of the first water-soluble organic solvent in the ink is preferably 1.00% by mass or more to 50.00% by mass or less, more preferably 3.00% by mass or more to 40.00% by mass or less with respect to the total mass of the ink. In addition, the mass ratio of the content (% by mass) of the first water-soluble organic solvent to the

content (% by mass) of the above-mentioned self-dispersible pigment, in which a group represented by the general formula (1) is bonded to the surface of the particle of the pigment, in the aqueous ink is preferably 1.5 times or more. When the above-mentioned mass ratio is 1.5 times or more, a color developability-improving effect is improved and hence excellent color developability is easily obtained. In addition, the above-mentioned mass ratio is preferably 10.0 times or less.

(Other Components)

A water-soluble organic compound that is a solid at normal temperature, for example, a polyhydric alcohol, such as trimethylolpropane or trimethylolethane, urea or a urea derivative such as ethylene urea, may be incorporated into the ink as required in addition to the above-mentioned components. Further, various additives, such as a pH adjuster, an antifoaming agent, a rust inhibitor, an antiseptic, an antifungal agent, an antioxidant, an anti-reducing agent and an evaporation accelerator, may each be incorporated into the ink as required. The ink may be free of a higher fatty acid or a salt thereof.

A surfactant may be incorporated into the ink. Examples of the kind of the surfactant may include an anionic surfactant, a nonionic surfactant and a cationic surfactant that are known. Those surfactants may be used alone or in combination thereof. Of those, a nonionic surfactant is preferably incorporated into the ink. Surfactants having various structures, such as hydrocarbon-based, silicone-based and fluorine-based structures, may each be utilized as the nonionic surfactant. Of those, a hydrocarbon-based nonionic surfactant is preferably used. When the surfactant is incorporated into the ink, the content (% by mass) of the surfactant in the ink is preferably 0.01% by mass or more to 5.00% by mass or less, more preferably 0.01% by mass or more to 3.00% by mass or less with respect to the total mass of the ink.

(Physical Property of Ink)

[Dynamic Surface Tension]

From the viewpoint of the fixability of the ink serving as an ink to be applied to an ink jet system, the dynamic surface tension of the ink at 10 milliseconds is preferably set as described below. That is, the dynamic surface tension is preferably 52 mN/m or less, more preferably 50 mN/m or less, still more preferably 48 mN/m or less. When the dynamic surface tension of the ink at 10 milliseconds is set to 52 mN/m or less, the permeation of the ink is fast and hence the fixability thereof is improved. In addition, the dynamic surface tension of the ink at 10 milliseconds is preferably set to 32 mN/m or more because its pigment is suppressed from sinking into a recording medium and hence the color developability of an image can be improved.

The dynamic surface tension of the ink is measured by a maximum bubble pressure method under the condition of 25°C. The maximum bubble pressure method is a method including: measuring the maximum pressure required for releasing bubbles generated at the distal end of a probe (capillary) immersed in a liquid to be measured; and determining the surface tension of the liquid from the measured maximum pressure. Specifically, the maximum pressure is measured while bubbles are continuously generated at the distal end of the probe. A time period from the time point when a new bubble surface appears at the distal end of the probe to the time point when the maximum bubble pressure (time point when the radius of curvature of the bubble becomes equal to the radius of the distal end portion of the probe) is reached is referred to as "lifetime". That is, the maximum bubble pressure method is a method including measuring the surface tension of a liquid in a state of motion. The dynamic surface tension of the ink at 10 milliseconds may be easily adjusted by, for example, the kinds and contents of the water-soluble organic solvent and the surfactant.

[Other Physical Properties]

From the viewpoint of the reliability of the ink serving as an ink to be applied to an ink jet system, the physical property values of the ink are preferably appropriately controlled. Specifically, the viscosity of the ink at 25°C is preferably 1.0 mPa·s or more to 10.0 mPa·s or less. In addition, the pH of the ink at 25°C is preferably 7.0 or more to 9.5 or less, more preferably 8.0 or more to 9.5 or less. The viscosity of the ink may be measured with a rotational viscometer or the like.

<Ink Cartridge>

An ink cartridge of the present disclosure includes an ink and an ink storage portion that stores the ink. In addition, the ink stored in the ink storage portion is the aqueous ink of the present disclosure described above. Fig. 1 is a sectional view for schematically illustrating an ink cartridge according to one embodiment of the present disclosure. As illustrated in Fig. 1, an ink supply port 12 for supplying an ink to a recording head is arranged on the bottom surface of the ink cartridge. The inside of the ink cartridge is the ink storage portion for storing the ink. The ink storage portion includes an ink storage

chamber 14 and an absorbent storage chamber 16, and the chambers communicate to each other through a communication port 18. In addition, the absorbent storage chamber 16 communicates to the ink supply port 12. While a liquid ink 20 is stored in the ink storage chamber 14, absorbents 22 and 24 each of which holds the ink in a state of being impregnated therewith are stored in the absorbent storage chamber 16. The ink storage portion may be configured to be free of an ink storage chamber that stores the liquid ink and to hold the whole amount of the ink to be stored with the absorbents. In addition, the ink storage portion may be configured to be free of an absorbent and to store the whole amount of the ink in a liquid state. Further, an ink cartridge configured to include the ink storage portion and a recording head may be adopted.

<Ink Jet Recording Method>

An ink jet recording method of the present disclosure is a method including ejecting the aqueous ink of the present disclosure described above from a recording head of an ink jet system to record an image on a recording medium. A system of ejecting the ink is, for example, a system including applying mechanical energy to the ink or a system including applying thermal energy to the ink. In the present disclosure, the system including applying the thermal energy to the ink to eject the ink is particularly preferably adopted. The step of the ink jet recording method only needs to be a known step except that the ink of the present disclosure is used.

Fig. 2A and Fig. 2B are views for schematically illustrating an example of an ink jet recording apparatus to be used in the ink jet recording method of the present disclosure, in which Fig. 2A is a perspective view of the main portion of the ink jet recording apparatus and Fig. 2B is a perspective view of a head cartridge. A conveying unit (not shown) that conveys a recording medium 32 and a carriage shaft 34 are arranged in the ink jet recording apparatus. A head cartridge 36 may be mounted on the carriage shaft 34. The head cartridge 36 includes recording heads 38 and 40 and is formed so that an ink cartridge 42 may be set therein. While the head cartridge 36 is conveyed along the carriage shaft 34 in a main scanning direction, the ink (not shown) is ejected from the recording heads 38 and 40 toward the recording medium 32. Then, the recording medium 32 is conveyed by the conveying unit (not shown) in a sub-scanning direction. Thus, the image is recorded on the recording medium 32.

Fig. 3 is a schematic view for illustrating an example of the cleaning portion of the ink jet recording apparatus. The cleaning portion brings a cap 51 into abutment with the surface of each of the recording heads each having an ejection orifice to cover the ejection orifice. Thus, the evaporation of the ink can be suppressed. More specifically, capping is performed as follows: a cap holder 56 is raised by a vertically movable mechanism (not shown) to bring the cap 51 into abutment with the surface of the recording head having the ejection orifice at an appropriate adhesive force. When a pump 50 is activated under a state in which the capping is performed, a negative pressure is produced between the surface having the ejection orifice and the cap 51, and hence the ink is sucked from the ejection orifice. Thus, the cleaning of the recording head is performed. In addition, an ejection state can be recovered to a normal state by ejecting (preliminarily ejecting) the ink toward suction chambers 52 and 53. Further, when the ink present on the cap 51 is sucked through an outlet (not shown) under a state in which the cap 51 is separated from the surface of the recording head having the ejection orifice, the sticking of the ink to the recording head and any other harmful effect can be suppressed. An ink-absorbing member or the like may be arranged inside each of the suction chambers.

In Fig. 3, the following configuration has been described: a suction chamber formed by a peripheral wall portion 54 is divided into the two suction chambers 52 and 53 having the same volume by a partition wall 55. However, the volumes of those suction chambers may be different from each other, or the cleaning portion may include one suction chamber without any partition wall. Further, a configuration in which respective ejection orifice arrays that eject a plurality of kinds of inks are collectively covered with one cap may be adopted. Alternatively, a cap may be arranged for each of the ejection orifice arrays that eject the plurality of kinds of inks.

[Examples]

The present disclosure is described in more detail below by way of Examples and Comparative Examples. However, the present disclosure is by no means limited to Examples below, and various modifications are possible without departing from the gist of the present disclosure. In the description of the amounts of components, "part(s)" and "%" are by mass unless otherwise specified.

<Preparation of Pigment Dispersion Liquid>

(Total Anionic Group Amount of First Functional Group and Second Functional Group)

To determine the total anionic group amount of a first functional group and a second functional group with high accuracy, a sample was purified. First, a pigment dispersion liquid was diluted so that the content of its pigment became about 5%. The diluted liquid was centrifuged with an ultracentrifuge (product name: "Optima MAX-XP", manufactured by

Beckman Coulter, Inc.) under the conditions of 80,000 rpm and 2 hours. The sedimented pigment was redispersed in pure water having a volume 30 times as large as that of the pigment (on a mass basis) to prepare a measurement liquid. The total anionic group amount of the first functional group and second functional group of the self-dispersible pigment in the measurement liquid was measured by colloidal titration utilizing a potential difference. A potential difference automatic titration apparatus (product name: "AT-510", manufactured by Kyoto Electronics Manufacturing Co., Ltd.) mounted with a flow potential titration unit (PCD-500) was used in the measurement.

(Anionic Group Amounts of First Functional Group and Second Functional Group)

At the time of the measurement of the anionic group amount of each functional group, the following pretreatment was performed. At this time, to determine the anionic group amount of each of the first functional group and the second functional group with high accuracy, a sample was purified by performing acid deposition with hydrochloric acid. A pigment dispersion liquid in which the content (% by mass) of its pigment was 10% was prepared, and an excess amount (about three-fold amount with respect to the anionic group amount on a molar basis) of hydrochloric acid was added thereto, followed by sufficient stirring. Through the operation, the self-dispersible pigment aggregated to produce an aggregate. The aggregate was separated by filtration through suction filtration, and was then washed with water to provide a pigment in a solid state. The resultant pigment was dried in a vacuum at 60°C for 24 hours. Two milligrams of the pigment were used as a sample, and thermogravimetric analysis was performed by heating the sample with a thermogravimetric analyzer (product name: "TGA 550", manufactured by TA Instruments) in the range of from 30°C to 600°C under a temperature increase condition of 2°C/min.

A pigment dispersion liquid of each of the following self-dispersible pigments each having the same anionic group amount as that of the self-dispersible pigment to be subjected to the measurement was prepared as a reference standard: a self-dispersible pigment X that had the first functional group and was free of the second functional group; and a self-dispersible pigment Y that had the second functional group and was free of the first functional group. When the mass of a sample at the time point of the start of its thermogravimetric analysis is defined as 100%, a value obtained by representing, in percentage, the ratio of the mass of the sample remaining at the time point when the sample is heated to 400°C is defined as a "mass residual ratio (%)." First, the above-mentioned operation was performed on the pigment dispersion liquid of the self-dispersible pigment X having the first functional group to measure a mass residual ratio $w_1$ (%) at the time point when the temperature of the pigment reached 400°C. Next, the above-mentioned operation was also performed on the pigment dispersion liquid of the self-dispersible pigment Y having the second functional group to measure a mass residual ratio $w_2$ (%) at the time point when the temperature of the pigment reached 400°C. Further, the above-mentioned operation was also performed on the self-dispersible pigment to be subjected to the measurement to measure a mass residual ratio w (%) at the time point when the temperature of the pigment reached 400°C.

The ratio $r_1$ (times) of the anionic group amount of the first functional group to the total anionic group amount (mmol/g) of the first functional group and the second functional group was calculated based on the following equation (7), and the ratio $r_2$ (times) of the anionic group amount of the second functional group to the total anionic group amount was calculated based on the following equation (8).

$$r_1=(w_2-w)/(w_2-w_1)\cdots\text{Equation (7)}$$

$$r_2=(w-w_1)/(w_2-w_1)\cdots\text{Equation (8)}$$

The anionic group amount of the first functional group and the anionic group amount of the second functional group were calculated from the total anionic group amount by utilizing the ratio $r_1$ (times) of the anionic group amount of the first functional group and the ratio $r_2$ (times) of the anionic group amount of the second functional group thus obtained. It was recognized that the anionic group amount of the first functional group calculated by the approach generally coincided with the anionic group amount of the first functional group calculated from the anionic group amount of a pigment dispersion liquid obtained in a first step in a process for the preparation of the pigment dispersion liquid to be described later.

(Average Particle Diameter of Pigment)

The average particle diameter (volume-based cumulative 50% particle diameter, $D_{50}$) of a pigment was measured with a particle diameter-measuring apparatus based on a dynamic light scattering method (product name: "Nanotrac Wave", manufactured by MicrotracBEL Corp.).

(Pigment Dispersion Liquids 1 to 17, 20 and 21)

Respective pigment dispersion liquids were obtained by using, as a method of bonding a first functional group and a second functional group to the surface of the particle of a pigment, a method including performing the following steps in a stepwise manner: a step of treating the surface of the pigment with a first treatment agent having the first functional group; and a step of treating the surface of the pigment with a second treatment agent having the second functional group. Specific description is given below.

[First Step]

440.0 Grams of pure water, 50.0 g of a pigment shown in Table 1 (Table 1-1 and Table 1-2) and a treatment agent whose kind and amount (g) were shown in the column "First step" of Table 1 were mixed to provide a mixed liquid. While the mixed liquid was cooled to 10°C and stirred, a 20% aqueous solution of potassium nitrite ($KNO_2$) whose amount (g) was shown in Table 1 was slowly added to the mixed liquid. The mixed liquid was stirred for 15 minutes, and was further stirred with a precision emulsifying and dispersing machine (product name: "CLEARMIX CLM-0.8S", manufactured by M Technique Co., Ltd.) at a number of revolutions of 10,000 rpm for a time period shown in Table 1. Next, an 8 mol/L aqueous solution of potassium hydroxide was added to the mixed liquid so that its pH became 10. The resultant was purified by ultrafiltration until the electric conductivity of a filtrate became 10 μS/cm or less. After the ultrafiltration, the purified product was centrifuged at a number of revolutions of 10,000 rpm for 30 minutes so that its coarse particle was removed. An appropriate amount of ion-exchanged water was added to the residue to adjust the content of the pigment. Thus, a pigment dispersion liquid in which the content of the pigment was 12.0% was obtained. The abbreviations of the kinds of the pigments shown in Table 1 are as described below.

CB: carbon black
PB15:3: C.I. Pigment Blue 15:3
PR122: C.I. Pigment Red 122
PY74: C.I. Pigment Yellow 74

[Second Step]

30.0 Grams of pure water, 170.0 g of the resultant pigment dispersion liquid and a treatment agent whose kind and amount (g) were shown in the column "Second step" of Table 1 were mixed to provide a mixed liquid. While the mixed liquid was stirred, a 20% aqueous solution of potassium nitrite ($KNO_2$) whose amount (g) was shown in Table 1 was slowly added to the mixed liquid. The mixed liquid was stirred with a magnetic stirrer for a time period shown in Table 1. Next, an 8 mol/L aqueous solution of potassium hydroxide was added to the mixed liquid so that its pH became 10. With regard to a pigment dispersion liquid whose "counter ion" shown in Table 1 was Na or $NH_4$, the counter ion of an anionic group was substituted by an ion exchange method. The resultant was purified by ultrafiltration until the electric conductivity of a filtrate became 10 μS/cm or less. After the ultrafiltration, an appropriate amount of ion-exchanged water was added to the purified product to adjust the content of the pigment. Thus, a pigment dispersion liquid in which the content of the pigment was 10.0% and which had an average particle diameter ($D_{50}$) of 110 nm, the pigment dispersion liquid having characteristics shown in Table 2, was obtained.

Through the above-mentioned first step and second step, there were prepared pigment dispersion liquids 1 to 17, 20 and 21 each containing a self-dispersible pigment in which the first functional group represented by the general formula (1) and the second functional group represented by the general formula (2) were bonded to the surface of the particle of the pigment. The prepared pigment dispersion liquids 1 to 17, 20 and 21 each contain a self-dispersible pigment in which such groups that the kinds of the first functional group and the second functional group ($M^1$ in the general formula (1) and $M^2$ in the general formula (2) each serving as a counter ion) are as shown in Table 1 are bonded to the surface of the particle of the pigment.

(Pigment Dispersion Liquids 18 and 19)

440.0 Grams of pure water, 50.0 g of a pigment shown in Table 1 and a treatment agent whose kind and amount (g) were shown in Table 1 were mixed to provide a mixed liquid. While the mixed liquid was cooled to 10°C and stirred, a 20% aqueous solution of potassium nitrite whose amount (g) was shown in Table 1 was slowly added to the mixed liquid. The mixed liquid was stirred for 15 minutes, and was further stirred with a precision emulsifying and dispersing machine (product name: "CLEARMIX CLM-0.8S", manufactured by M Technique Co., Ltd.) at a number of revolutions of 10,000 rpm for a time period shown in Table 1. Next, an 8 mol/L aqueous solution of potassium hydroxide was added to the mixed liquid so that its pH became 10. The resultant was purified by ultrafiltration until the electric conductivity of a filtrate became 10

μS/cm or less. After the ultrafiltration, the purified product was centrifuged at a number of revolutions of 10,000 rpm for 30 minutes so that its coarse particle was removed. An appropriate amount of ion-exchanged water was added to the residue to adjust the content of the pigment. Thus, a pigment dispersion liquid in which the content of the pigment was 10.0% and which had an average particle diameter ($D_{50}$) of 110 nm, the pigment dispersion liquid having characteristics shown in Table 2, was obtained.

(Pigment Dispersion Liquid 22)

A pigment dispersion liquid 22 containing a self-dispersible pigment was prepared by using 5-aminobenzene-1,2,3-tricarboxylic acid as a treatment agent in conformity with the description of Example 2 of Japanese Patent Laid-Open No. 2009-506196. The content of the pigment in the pigment dispersion liquid 22 was 15.0%.

(Pigment Dispersion Liquid 23)

A pigment dispersion liquid 23 containing a self-dispersible pigment was prepared by using [(4-aminophenyl)(hydroxyl)methylene]bisphosphonic acid monosodium salt as a treatment agent in conformity with the description of Example 10 of Japanese Patent Laid-Open No. 2009-515007. The content of the pigment in the pigment dispersion liquid 23 was 12.0%.

(Pigment Dispersion Liquid 24)

A pigment dispersion liquid 24 containing a self-dispersible pigment was prepared by using ((4-aminobenzoylamino)-methane-1,1-diyl)bisphosphonic acid and p-aminobenzoic acid as treatment agents in conformity with the description of a method of preparing the self-dispersible pigment 1 of Japanese Patent Laid-Open No. 2013-253230. The content of the pigment in the pigment dispersion liquid 24 was 10.0%.

Table 1-1: Conditions for preparation of self-dispersible pigments

| Pigment dispersion liquid | Pigment | | First step | | | |
|---|---|---|---|---|---|---|
| | Kind | Specific surface area ($m^2/g$) | Treatment agent | | 20% Aqueous solution of $KNO_2$ (g) | Stirring time (h) |
| | | | Kind | Amount (g) | | |
| 1 | CB | 260 | 2-Aminoterephthalic acid | 5.9 | 3.0 | 3 |
| 2 | CB | 260 | 2-Aminoterephthalic acid | 5.9 | 3.0 | 3 |
| 3 | CB | 260 | 2-Aminoterephthalic acid | 5.9 | 3.0 | 3 |
| 4 | CB | 260 | 2-Aminoterephthalic acid | 0.9 | 0.5 | 1 |
| 5 | CB | 260 | 2-Aminoterephthalic acid | 1.8 | 0.9 | 1 |
| 6 | CB | 260 | 2-Aminoterephthalic acid | 8.5 | 4.4 | 3 |
| 7 | PB15:3 | 90 | 2-Aminoterephthalic acid | 5.9 | 3.0 | 5 |
| 8 | PR122 | 130 | 2-Aminoterephthalic acid | 5.9 | 3.0 | 5 |
| 9 | PY74 | 60 | 2-Aminoterephthalic acid | 5.9 | 3.0 | 5 |
| 10 | CB | 180 | 2-Aminoterephthalic acid | 5.9 | 3.0 | 3 |
| 11 | CB | 200 | 2-Aminoterephthalic acid | 5.9 | 3.0 | 3 |
| 12 | CB | 260 | 2-Aminoterephthalic acid | 5.9 | 3.0 | 3 |
| 13 | CB | 260 | 2-Aminoterephthalic acid | 5.9 | 3.0 | 3 |
| 14 | CB | 260 | 2-Aminoterephthalic acid | 1.5 | 0.8 | 1 |
| 15 | CB | 260 | 2-Aminoterephthalic acid | 1.9 | 1.0 | 1 |
| 16 | CB | 260 | 2-Aminoterephthalic acid | 15.1 | 7.8 | 3 |
| 17 | CB | 180 | 2-Aminoterephthalic acid | 0.4 | 0.2 | 1 |
| 18 | CB | 260 | 2-Aminoterephthalic acid | 9.1 | 4.7 | 3 |

(continued)

| Pigment dispersion liquid | Pigment | | First step | | | |
|---|---|---|---|---|---|---|
| | Kind | Specific surface area ($m^2/g$) | Treatment agent | | 20% Aqueous solution of $KNO_2$ (g) | Stirring time (h) |
| | | | Kind | Amount (g) | | |
| 19 | CB | 260 | 4-Aminophthalic acid | 9.1 | 4.7 | 3 |
| 20 | CB | 260 | 2-Aminoterephthalic acid | 0.8 | 0.4 | 1 |
| 21 | CB | 260 | 2-Aminoterephthalic acid | 8.8 | 4.5 | 3 |

Table 1-2: Conditions for preparation of self-dispersible pigments

| Pigment dispersion liquid | Second step | | | | |
|---|---|---|---|---|---|
| | Treatment agent | | 20% Aqueous solution of $KNO_2$ (g) | Stirring time (h) | Counter ion |
| | Kind | Amount (g) | | | |
| 1 | 4-Aminophthalic acid | 1.1 | 2.6 | 2 | K |
| 2 | 4-Aminophthalic acid | 1.1 | 2.6 | 2 | Na |
| 3 | 4-Aminophthalic acid | 1.1 | 2.6 | 2 | $NH_4$ |
| 4 | 4-Aminophthalic acid | 2.9 | 6.8 | 2 | K |
| 5 | 4-Aminophthalic acid | 1.8 | 4.3 | 2 | K |
| 6 | 4-Aminophthalic acid | 0.5 | 1.3 | 2 | K |
| 7 | 4-Aminophthalic acid | 1.1 | 2.6 | 2 | K |
| 8 | 4-Aminophthalic acid | 1.1 | 2.6 | 2 | K |
| 9 | 4-Aminophthalic acid | 1.1 | 2.6 | 2 | K |
| 10 | 4-Aminophthalic acid | 1.1 | 2.6 | 2 | K |
| 11 | 4-Aminophthalic acid | 1.1 | 2.6 | 2 | K |
| 12 | 3-Aminophthalic acid | 1.1 | 2.6 | 2 | K |
| 13 | 5-Aminoisophthalic acid | 1.1 | 2.6 | 2 | K |
| 14 | 4-Aminophthalic acid | 0.2 | 0.5 | 2 | K |
| 15 | 4-Aminophthalic acid | 0.3 | 0.7 | 2 | K |
| 16 | 4-Aminophthalic acid | 3.6 | 8.5 | 2 | K |
| 17 | 3-Aminophthalic acid | 1.0 | 2.3 | 2 | K |
| 18 | None | - | - | - | K |
| 19 | None | - | - | - | K |
| 20 | 4-Aminophthalic acid | 3.1 | 7.2 | 2 | K |
| 21 | 4-Aminophthalic acid | 0.3 | 0.8 | 2 | K |

Table 2: Characteristics of self-dispersible pigments

| Pigment dispersion liquid | Anionic group amount A (mmol/g) | Anionic group amount of general formula (1) $T_1$ (mmol/g) | Anionic group amount of general formula (2) $T_2$ (mmol/g) | Value of $T_1/(T_1+T_2)$ (times) |
|---|---|---|---|---|
| 1 | 0.150 | 0.120 | 0.030 | 0.80 |
| 2 | 0.150 | 0.120 | 0.030 | 0.80 |
| 3 | 0.150 | 0.120 | 0.030 | 0.80 |

(continued)

| Pigment dispersion liquid | Anionic group amount A (mmol/g) | Anionic group amount of general formula (1) $T_1$ (mmol/g) | Anionic group amount of general formula (2) $T_2$ (mmol/g) | Value of $T_1/(T_1+T_2)$ (times) |
|---|---|---|---|---|
| 4 | 0.150 | 0.030 | 0.120 | 0.20 |
| 5 | 0.150 | 0.060 | 0.090 | 0.40 |
| 6 | 0.150 | 0.145 | 0.005 | 0.97 |
| 7 | 0.150 | 0.120 | 0.030 | 0.80 |
| 8 | 0.150 | 0.120 | 0.030 | 0.80 |
| 9 | 0.150 | 0.120 | 0.030 | 0.80 |
| 10 | 0.150 | 0.120 | 0.030 | 0.80 |
| 11 | 0.150 | 0.120 | 0.030 | 0.80 |
| 12 | 0.150 | 0.120 | 0.030 | 0.80 |
| 13 | 0.150 | 0.120 | 0.030 | 0.80 |
| 14 | 0.060 | 0.048 | 0.012 | 0.80 |
| 15 | 0.080 | 0.064 | 0.016 | 0.80 |
| 16 | 0.200 | 0.160 | 0.040 | 0.80 |
| 17 | 0.060 | 0.012 | 0.048 | 0.20 |
| 18 | 0.150 | 0.150 | 0.000 | 1.00 |
| 19 | 0.150 | 0.000 | 0.150 | 0.00 |
| 20 | 0.150 | 0.026 | 0.124 | 0.17 |
| 21 | 0.150 | 0.147 | 0.003 | 0.98 |

<Preparation of Compound represented by General Formula (4)>

Compounds having structures shown in Table 3 were prepared as specific examples of the compound represented by the general formula (4). Those compounds are each obtained by neutralizing each of the carboxylic acid groups of 2-hydroxyterephthalic acid or 2-nitroterephthalic acid commercially available as a reagent with a neutralizer shown in Table 3 to turn the group into a salt type.

Table 3: Compound represented by General Formula (4)

| Compound | Substance name | Neutralizer | $R^6$ | $M^3$ |
|---|---|---|---|---|
| 1 | Dipotassium 2-hydroxyterephthalate | Potassium hydroxide | OH | K |
| 2 | Disodium 2-hydroxyterephthalate | Sodium hydroxide | OH | Na |
| 3 | Diammonium 2-hydroxyterephthalate | Ammonia water | OH | $NH_4$ |
| 4 | Dipotassium 2-nitroterephthalate | Potassium hydroxide | $NO_2$ | K |

<Synthesis of Resin>

(Aqueous Solution of Acrylic Resin 1)

60.0 Parts of styrene, 21.0 parts of n-butyl acrylate and 19.0 parts of acrylic acid were copolymerized by an ordinary method to synthesize an acrylic resin 1 serving as a random copolymer. Potassium hydroxide whose molar amount was equal to the acid value of the resin was added to the resin. Further, an appropriate amount of pure water was added to the mixture to prepare an aqueous solution of the acrylic resin 1, which contained the acrylic resin 1 having an acid value of 148 mgKOH/g and a weight-average molecular weight of 10,000, and in which the content of the resin (solid content) was 20.0%.

(Aqueous Solution of Acrylic Resin 2)

44.6 Parts of styrene, 40.0 parts of α-methylstyrene and 15.4 parts of acrylic acid were copolymerized by an ordinary method to synthesize an acrylic resin 2 serving as a random copolymer. Potassium hydroxide whose molar amount was equal to the acid value of the resin was added to the resin. Further, an appropriate amount of pure water was added to the mixture to prepare an aqueous solution of the acrylic resin 2, which contained the acrylic resin 2 having an acid value of 120 mgKOH/g and a weight-average molecular weight of 10,000, and in which the content of the resin (solid content) was 20.0%.

(Aqueous Solution of Urethane Resin)

39.3 Grams of a polytetramethylene glycol having a number-average molecular weight of 2,000, 44.5 g of isophorone diisocyanate and 0.007 g of dibutyltin dilaurate were loaded into a four-necked flask including a temperature gauge, a stirring machine, a nitrogen-introducing tube and a cooling tube. The materials were caused to react with each other under a nitrogen gas atmosphere at a temperature of 100°C for 5 hours, and then the resultant was cooled to a temperature of 65°C or less. 13.2 Grams of dimethylolpropionic acid, 3.0 g of neopentyl glycol and 150.0 g of methyl ethyl ketone were added to the cooled product, and the mixture was subjected to a reaction at a temperature of 80°C. After that, the resultant was cooled to a temperature of 40°C, and 20.0 g of methanol was added thereto to stop the reaction. Next, an appropriate amount of ion-exchanged water was added to the mixture, and while the whole was stirred with a homomixer, an aqueous solution of potassium hydroxide required for the neutralization of a resin was added thereto. After that, methyl ethyl ketone and unreacted methanol were evaporated under heating and reduced pressure. Thus, an aqueous solution of a urethane resin, which contained the urethane resin having an acid value of 55 mgKOH/g and a weight-average molecular weight of 15,000, and in which the content of the resin (solid content) was 20.0%, was prepared.

<Preparation of Ink>

Respective components (unit: %) shown in the middle section of Table 4 (Table 4-1 to Table 4-4) and the compounds 1 to 4 were mixed so that the concentrations of the compounds became values shown in the lower section thereof, followed by sufficient stirring. After that, the mixtures were filtered under pressure with a membrane filter having a pore size of 2.5 μm (product name: "HDCII FILTER", manufactured by Pall Corporation) to prepare respective inks. Pigment dispersion liquids whose kinds (numbers) were shown in the upper section of Table 4 were used as pigment dispersion liquids shown in the middle section of Table 4. Numerical values in parentheses for a water-soluble organic solvent represent a LogP value at 25°C and a vapor pressure (unit: Pa is omitted) at 25°C. However, the vapor pressure of a component that is a solid at 25°C is represented as "-". A numerical value attached to the polyethylene glycol represents its number-average molecular weight. The term "ACETYLENOL E60" refers to the product name of a nonionic surfactant (ethylene oxide adduct of acetylene glycol) manufactured by Kawaken Fine Chemicals Co., Ltd. The term "SURFYNOL 465" refers to the product name of a nonionic surfactant (ethylene oxide adduct of acetylene glycol) manufactured by Nissin Chemical Co., Ltd. The usage amount of ion-exchanged water shown in the middle section of Table 4 includes the usage amount of each of the compounds 1 to 4 used at the time of the ink preparation. The characteristics of the inks are shown in the lower section of Table 4. The term "self-dispersible pigment having groups represented by general formulae (1) and (2) at specific ratio" shown in the lower section of Table 4 refers to a self-dispersible pigment in which the molar ratio "anionic group amount of first functional group/total anionic group amount of first functional group and second functional group" falls within the range of from 0.20 times or more to 0.97 times or less. The dynamic surface tension of each of the inks at 10 milliseconds fell within the range of from 47 mN/m to 48 mN/m. The dynamic surface tension of each of the inks in Examples at 10 milliseconds was measured with a dynamic surface tensiometer based on a maximum bubble pressure method (product name: "BUBBLE PRESSURE TENSIOMETER BP-2", manufactured by KRUSS Scientific) under the condition of 25°C.

Table 4-1: Compositions and characteristics of inks

| | Example | | | | | | | | |
|---|---|---|---|---|---|---|---|---|---|
| | 1 | 2 | 3 | 4 | 5 | 6 | 7 | 8 | 9 |
| Kind (number) of pigment dispersion liquid | 1 | 2 | 3 | 4 | 5 | 6 | 7 | 8 | 9 |
| Pigment dispersion liquid | 45.00 | 45.00 | 45.00 | 45.00 | 45.00 | 45.00 | 45.00 | 45.00 | 45.00 |
| Aqueous solution of acrylic resin 1 | 5.00 | 5.00 | 5.00 | 5.00 | 5.00 | 5.00 | 5.00 | 5.00 | 5.00 |

(continued)

| | Example | | | | | | | | |
|---|---|---|---|---|---|---|---|---|---|
| | 1 | 2 | 3 | 4 | 5 | 6 | 7 | 8 | 9 |
| Aqueous solution of acrylic resin 2 | | | | | | | | | |
| Aqueous solution of urethane resin | 2.50 | 2.50 | 2.50 | 2.50 | 2.50 | 2.50 | 2.50 | 2.50 | 2.50 |
| Glycerin (-1.85, 0.03) | 7.00 | 7.00 | 7.00 | 7.00 | 7.00 | 7.00 | 7.00 | 7.00 | 7.00 |
| Triethylene glycol (-1.65, 0.04) | 5.00 | 5.00 | 5.00 | 5.00 | 5.00 | 5.00 | 5.00 | 5.00 | 5.00 |
| 1,3-Propanediol (-1.09, 4.6) | | | | | | | | | |
| 1,2-Propanediol (-1.01, 27.2) | | | | | | | | | |
| 1,4-Butanediol (-0.77, 1.9) | | | | | | | | | |
| 1,5-Pentanediol (-0.56, 1.0) | | | | | | | | | |
| 2-Pyrrolidone (-1.09, 3.9) | | | | | | | | | |
| Trimethylolpropane (-1.07, -) | | | | | | | | | |
| Ethylene glycol (-1.36, 12.8) | | | | | | | | | |
| Polyethylene glycol 200 (-1.88, 0.001) | | | | | | | | | |
| SURFYNOL 465 | | | | | | | | | |
| ACETYLENOL E60 | 0.08 | 0.08 | 0.08 | 0.08 | 0.08 | 0.08 | 0.08 | 0.08 | 0.08 |
| Potassium phthalate | | | | | | | | | |
| Ion-exchanged water | 35.42 | 35.42 | 35.42 | 35.42 | 35.42 | 35.42 | 35.42 | 35.42 | 35.42 |
| Content P of self-dispersible pigment having groups represented by general formulae (1) and (2) at specific ratio (%) | 4.5 | 4.5 | 4.5 | 4.5 | 4.5 | 4.5 | 4.5 | 4.5 | 4.5 |
| Concentration of compound 1 (mmol/kg) | 0.75 | 0.75 | 0.75 | 0.75 | 0.75 | 0.75 | 0.75 | 0.75 | 0.75 |
| Concentration of compound 2 (mmol/kg) | | | | | | | | | |
| Concentration of compound 3 (mmol/kg) | | | | | | | | | |
| Concentration of compound 4 (mmol/kg) | | | | | | | | | |
| Content C of compound represented by general formula (4) (mmol/kg) | 0.75 | 0.75 | 0.75 | 0.75 | 0.75 | 0.75 | 0.75 | 0.75 | 0.75 |
| Value of C/P (mmol/kg·%) | 0.167 | 0.167 | 0.167 | 0.167 | 0.167 | 0.167 | 0.167 | 0.167 | 0.167 |

Table 4-2: Compositions and characteristics of inks

| | Example | | | | | | | | |
|---|---|---|---|---|---|---|---|---|---|
| | 10 | 11 | 12 | 13 | 14 | 15 | 16 | 17 | 18 |
| Kind (number) of pigment dispersion liquid | 10 | 11 | 12 | 13 | 14 | 15 | 16 | 1 | 1 |
| Pigment dispersion liquid | 45.00 | 45.00 | 45.00 | 45.00 | 45.00 | 45.00 | 45.00 | 45.00 | 45.00 |
| Aqueous solution of acrylic resin 1 | 5.00 | 5.00 | 5.00 | 5.00 | 5.00 | 5.00 | 5.00 | 5.00 | 5.00 |
| Aqueous solution of acrylic resin 2 | | | | | | | | | |
| Aqueous solution of urethane resin | 2.50 | 2.50 | 2.50 | 2.50 | 2.50 | 2.50 | 2.50 | 2.50 | 2.50 |
| Glycerin (-1.85, 0.03) | 7.00 | 7.00 | 7.00 | 7.00 | 7.00 | 7.00 | 7.00 | 7.00 | 7.00 |
| Triethylene glycol (-1.65, 0.04) | 5.00 | 5.00 | 5.00 | 5.00 | 5.00 | 5.00 | 5.00 | 5.00 | 5.00 |
| 1,3-Propanediol (-1.09, 4.6) | | | | | | | | | |
| 1,2-Propanediol (-1.01, 27.2) | | | | | | | | | |
| 1,4-Butanediol (-0.77, 1.9) | | | | | | | | | |
| 1,5-Pentanediol (-0.56, 1.0) | | | | | | | | | |
| 2-Pyrrolidone (-1.09, 3.9) | | | | | | | | | |
| Trimethylolpropane (-1.07, -) | | | | | | | | | |
| Ethylene glycol (-1.36, 12.8) | | | | | | | | | |
| Polyethylene glycol 200 (-1.88, 0.001) | | | | | | | | | |
| SURFYNOL 465 | | | | | | | | | |
| ACETYLENOL E60 | 0.08 | 0.08 | 0.08 | 0.08 | 0.08 | 0.08 | 0.08 | 0.08 | 0.08 |
| Potassium phthalate | | | | | | | | | |
| Ion-exchanged water | 35.42 | 35.42 | 35.42 | 35.42 | 35.42 | 35.42 | 35.42 | 35.42 | 35.42 |
| Content P of self-dispersible pigment having groups represented by general formulae (1) and (2) at specific ratio (%) | 4.5 | 4.5 | 4.5 | 4.5 | 4.5 | 4.5 | 4.5 | 4.5 | 4.5 |
| Concentration of compound 1 (mmol/kg) | 0.75 | 0.75 | 0.75 | 0.75 | 0.75 | 0.75 | 0.75 | | |
| Concentration of compound 2 (mmol/kg) | | | | | | | | | 0.75 |
| Concentration of compound 3 (mmol/kg) | | | | | | | | | |
| Concentration of compound 4 (mmol/kg) | | | | | | | | | |
| Content C of compound represented by general formula (4) (mmol/kg) | 0.75 | 0.75 | 0.75 | 0.75 | 0.75 | 0.75 | 0.75 | 0.00 | 0.75 |

(continued)

| | Example | | | | | | | | |
|---|---|---|---|---|---|---|---|---|---|
| | 10 | 11 | 12 | 13 | 14 | 15 | 16 | 17 | 18 |
| Value of C/P (mmol/kg·%) | 0.167 | 0.167 | 0.167 | 0.167 | 0.167 | 0.167 | 0.167 | 0.000 | 0.167 |

Table 4-3: Compositions and characteristics of inks

| | Example | | | | | | | | |
|---|---|---|---|---|---|---|---|---|---|
| | 19 | 20 | 21 | 22 | 23 | 24 | 25 | 26 | 27 |
| Kind (number) of pigment dispersion liquid | 1 | 1 | 1 | 1 | 1 | 1 | 17 | 1 | 1 |
| Pigment dispersion liquid | 45.00 | 45.00 | 45.00 | 45.00 | 45.00 | 45.00 | 45.00 | 45.00 | 45.00 |
| Aqueous solution of acrylic resin 1 | 5.00 | 5.00 | 5.00 | 5.00 | 5.00 | 5.00 | 5.00 | 5.00 | 5.00 |
| Aqueous solution of acrylic resin 2 | | | | | | | | | |
| Aqueous solution of urethane resin | 2.50 | 2.50 | 2.50 | 2.50 | 2.50 | 2.50 | 2.50 | 2.50 | 2.50 |
| Glycerin (-1.85, 0.03) | 7.00 | 7.00 | 7.00 | 7.00 | 7.00 | 7.00 | 7.00 | | |
| Triethylene glycol (-1.65, 0.04) | 5.00 | 5.00 | 5.00 | 5.00 | 5.00 | 5.00 | 5.00 | | |
| 1,3-Propanediol (-1.09, 4.6) | | | | | | | | 12.00 | |
| 1,2-Propanediol (-1.01, 27.2) | | | | | | | | | 12.00 |
| 1,4-Butanediol (-0.77, 1.9) | | | | | | | | | |
| 1,5-Pentanediol (-0.56, 1.0) | | | | | | | | | |
| 2-Pyrrolidone (-1.09, 3.9) | | | | | | | | | |
| Trimethylolpropane (-1.07, -) | | | | | | | | | |
| Ethylene glycol (-1.36, 12.8) | | | | | | | | | |
| Polyethylene glycol 200 (-1.88, 0.001) | | | | | | | | | |
| SURFYNOL 465 | | | | | | | | | |
| ACETYLENOL E60 | 0.08 | 0.08 | 0.08 | 0.08 | 0.08 | 0.08 | 0.08 | 0.08 | |
| Potassium phthalate | | | | | | | | | |
| Ion-exchanged water | 35.42 | 35.42 | 35.42 | 35.42 | 35.42 | 35.42 | 35.42 | 35.42 | 35.50 |
| Content P of self-dispersible pigment having groups represented by general formulae (1) and (2) at specific ratio (%) | 4.5 | 4.5 | 4.5 | 4.5 | 4.5 | 4.5 | 4.5 | 4.5 | 4.5 |
| Concentration of compound 1 (mmol/kg) | | | 0.01 | 0.05 | 13.50 | 15.00 | | 0.75 | 0.75 |
| Concentration of compound 2 (mmol/kg) | | | | | | | | | |
| Concentration of compound 3 (mmol/kg) | 0.75 | | | | | | | | |

(continued)

| | Example | | | | | | | | |
|---|---|---|---|---|---|---|---|---|---|
| | 19 | 20 | 21 | 22 | 23 | 24 | 25 | 26 | 27 |
| Concentration of compound 4 (mmol/kg) | | 0.75 | | | | | | | |
| Content C of compound represented by general formula (4) (mmol/kg) | 0.75 | 0.75 | 0.01 | 0.05 | 13.50 | 15.00 | 0.00 | 0.75 | 0.75 |
| Value of C/P (mmol/kg·%) | 0.167 | 0.167 | 0.002 | 0.011 | 3.000 | 3.333 | 0.000 | 0.167 | 0.167 |

Table 4-4: Compositions and characteristics of inks

| | Example | Comparative Example | | | | | | | |
|---|---|---|---|---|---|---|---|---|---|
| | 28 | 1 | 2 | 3 | 4 | 5 | 6 | 7 | 8 |
| Kind (number) of pigment dispersion liquid | 1 | 18 | 19 | 20 | 21 | 18+19 | 22 | 23 | 24 |
| Pigment dispersion liquid | 45.00 | 45.00 | 45.00 | 45.00 | 45.00 | 22.50 22.50 | 45.00 | 45.00 | 45.00 |
| Aqueous solution of acrylic resin 1 | 5.00 | 5.00 | 5.00 | 5.00 | 5.00 | 5.00 | | | |
| Aqueous solution of acrylic resin 2 | | | | | | | | | 10.00 |
| Aqueous solution of urethane resin | 2.50 | 2.50 | 2.50 | 2.50 | 2.50 | 2.50 | | | |
| Glycerin (-1.85, 0.03) | | 7.00 | 7.00 | 7.00 | 7.00 | 7.00 | | | 10.00 |
| Triethylene glycol (-1.65, 0.04) | | 5.00 | 5.00 | 5.00 | 5.00 | 5.00 | | | |
| 1,3-Propanediol (-1.09, 4.6) | | | | | | | | | |
| 1,2-Propanediol (-1.01, 27.2) | | | | | | | | | |
| 1,4-Butanediol (-0.77, 1.9) | 12.00 | | | | | | | | |
| 1,5-Pentanediol (-0.56, 1.0) | | | | | | | 7.00 | 7.00 | |
| 2-Pyrrolidone (-1.09, 3.9) | | | | | | | 7.00 | 7.00 | |
| Trimethylolpropane (-1.07, -) | | | | | | | 5.00 | 5.00 | |
| Ethylene glycol (-1.36, 12.8) | | | | | | | | | 10.00 |
| Polyethylene glycol 200 (-1.88, 0.001) | | | | | | | | | 5.00 |
| SURFYNOL 465 | | | | | | | 0.20 | 200 | 0.20 |
| ACETYLENOL E60 | 0.05 | 0.08 | 0.08 | 0.08 | 0.08 | 0.08 | | | |

(continued)

| | Example | Comparative Example | | | | | | | |
|---|---|---|---|---|---|---|---|---|---|
| | 28 | 1 | 2 | 3 | 4 | 5 | 6 | 7 | 8 |
| Potassium phthalate | | | | | | | | | 0.20 |
| Ion-exchanged water | 35.45 | 35.42 | 35.42 | 35.42 | 35.42 | 35.42 | 54.13 | 45.67 | 34.60 |
| Content P of self-dispersible pigment having groups represented by general formulae (1) and (2) at specific ratio (%) | 4.5 | 0.0 | 0.0 | 0.0 | 0.0 | 0.0 | 0.0 | 0.0 | 0.0 |
| Concentration of compound 1 (mmol/kg) | 0.75 | 0.75 | 0.75 | 0.75 | 0.75 | 0.75 | | | |
| Concentration of compound 2 (mmol/kg) | | | | | | | | | |
| Concentration of compound 3 (mmol/kg) | | | | | | | | | |
| Concentration of compound 4 (mmol/kg) | | | | | | | | | |
| Content C of compound represented by general formula (4) (mmol/kg) | 0.75 | 0.75 | 0.75 | 0.75 | 0.75 | 0.75 | 0.00 | 0.00 | 0.00 |
| Value of C/P (mmol/kg·%) | 0.167 | - | - | - | - | - | - | - | - |

<Evaluation>

Each of the inks obtained in the foregoing was loaded into an ink cartridge, and the following evaluations were performed with an ink jet recording apparatus (product name: "Maxify iB4130", manufactured by CANON KABUSHIKI KAISHA) that ejected the ink from a recording head through the action of thermal energy. The ink cartridge was set at a position corresponding to the color of the prepared ink in the recording apparatus. In this Example, a solid image recorded by applying 23.4 ng of the ink to a unit region measuring 1/600 inch by 1/600 inch is defined as "having a recording duty of 100%." In this Example, in the following evaluation criteria, levels "A" and "B" were defined as acceptable levels, and levels "C" and "D" were defined as unacceptable levels. The evaluation results are shown in Table 5.

(Color Developability)

A solid image (measuring 2 cm by 2 cm) was recorded on each of the following three kinds of recording media (plain paper) with the above-mentioned ink jet recording apparatus. In the case of a black ink whose coloring material was carbon black, the recording duty of the solid image was set to 85%. In addition, in the case of a color ink whose coloring material was an organic pigment, the recording duty of the solid image was set to 50%. One day after the recording, the optical density of the solid image was measured with a fluorescence spectrodensitometer (product name: "FD-7", manufactured by Konica Minolta, Inc.) under the conditions of an illumination condition of M1 (D50), an observation light source of D50 and a field of view of 2°. The color developability of the image was evaluated based on the average of the resultant optical densities in the recording media in accordance with the following evaluation criteria.

[Recording Medium]

- Product name: "CS-680" (manufactured by CANON KABUSHIKi KAISHA)
- Product name: "Office 70" (manufactured by CANON KABUSHIKi KAISHA)
- Product name: "Multi-purpose paper" (manufactured by CANON KABUSHIKi KAISHA)

[Black Ink]

A: The average of the optical densities was 1.28 or more.
B: The average of the optical densities was 1.22 or more to less than 1.28.
C: The average of the optical densities was 1.16 or more to less than 1.22.
D: The average of the optical densities was less than 1.16.

[Color Ink]

A: The average of the optical densities was 1.03 or more.
B: The average of the optical densities was 0.98 or more to less than 1.03.
C: The average of the optical densities was 0.93 or more to less than 0.98.
D: The average of the optical densities was less than 0.93.

(Storage Stability)

Each of the inks obtained in the foregoing was loaded into a polytetrafluoroethylene-made container, and was sealed therein. As an acceleration test supposing long-term use of the ink jet recording apparatus, the sealed ink was loaded into a thermostat set to 80°C and heated for 1 week. After the temperature of the ink had been returned to 25°C, the average particle diameter (volume-based cumulative 50% particle diameter, $D_{50}$) of its pigment was measured with a particle diameter-measuring apparatus (product name: "Nanotrac Wave", manufactured by MicrotracBEL Corp.). The average particle diameter $D_{50}$ was measured under the following conditions: Set zero: 30 seconds; number of times of measurement: 3 times; and measurement time: 180 seconds. The value of a ratio between the particle diameters of the pigment before and after the storage, which was equal to the ratio of the average particle diameter of the pigment after the storage to the average particle diameter of the pigment before the storage, was calculated, and the storage stability of the ink was evaluated in accordance with the following evaluation criteria.

A: The ratio between the particle diameters of the pigment before and after the storage was less than 1.10 times.
B: The ratio between the particle diameters of the pigment before and after the storage was 1.10 times or more to less than 1.25 times.
C: The ratio between the particle diameters of the pigment before and after the storage was 1.25 times or more.

Table 5: Evaluation result

| | | Color developability | Storage stability |
|---|---|---|---|
| Example | 1 | A | A |
| | 2 | A | A |
| | 3 | A | A |
| | 4 | B | A |
| | 5 | A | A |
| | 6 | A | A |
| | 7 | B | A |
| | 8 | B | A |
| | 9 | B | A |
| | 10 | B | A |
| | 11 | A | A |
| | 12 | A | B |
| | 13 | A | B |
| | 14 | A | B |
| | 15 | A | A |
| | 16 | A | A |
| | 17 | B | A |
| | 18 | A | A |
| Example | 19 | A | A |
| | 20 | A | A |
| | 21 | B | A |
| | 22 | A | A |
| | 23 | A | A |
| | 24 | A | B |
| | 25 | B | B |
| | 26 | A | A |
| | 27 | A | A |
| | 28 | A | A |
| Comparative Example | 1 | A | C |
| | 2 | D | A |
| | 3 | C | A |
| | 4 | A | C |
| | 5 | C | C |
| | 6 | A | D |
| | 7 | C | A |
| | 8 | C | A |

The color developability of each of Examples 1 and 26 to 28 was at an A rank. However, the color developability of each of Examples 26 to 28 was relatively excellent as compared to that of Example 1.

Various embodiments have been described in detail above but it will be understood that the present disclosure is

not limited to these embodiments and encompasses all modifications, variants, alternatives and equivalents falling within the scope of the appended claims.

## Claims

1. An aqueous ink for ink jet comprising a self-dispersible pigment,

   wherein the self-dispersible pigment comprises a self-dispersible pigment in which functional groups are bonded to a surface of a particle of a pigment,
   wherein the functional groups comprise a first functional group represented by the following general formula (1) and a second functional group comprising at least one kind of group represented by the following general formula (2), and
   wherein a molar ratio of an anionic group amount (mmol/g) of the first functional group to a total anionic group amount (mmol/g) of the first functional group and the second functional group in the self-dispersible pigment is 0.20 times or more to 0.97 times or less:

   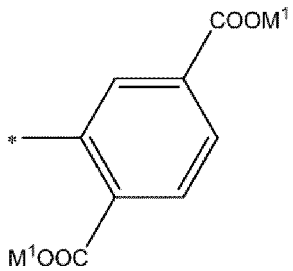

   (1)

   in the general formula (1), $M^1$s each independently represent a hydrogen atom, an alkali metal, ammonium or an organic ammonium, and * represents a bonding position to the surface of the particle of the pigment;

   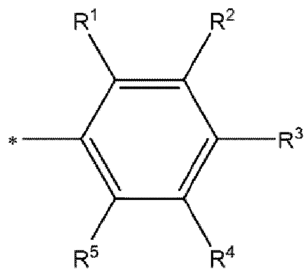

   (2)

   in the general formula (2), two of $R^1$ to $R^5$ each represent $COOM^2$ and three thereof represent hydrogen atoms, and the two $COOM^2$s are adjacent to each other or are present at positions sandwiching one carbon atom for forming a benzene ring, $M^2$s each independently represent a hydrogen atom, an alkali metal, ammonium or an organic ammonium, and * represents a bonding position to the surface of the particle of the pigment.

2. The aqueous ink according to claim 1, wherein the molar ratio of the anionic group amount (mmol/g) of the first functional group to the total anionic group amount (mmol/g) of the first functional group and the second functional group in the self-dispersible pigment is 0.40 times or more to 0.97 times or less.

3. The aqueous ink according to claim 1 or 2, wherein the pigment comprises carbon black.

4. The aqueous ink according to claim 3, wherein the carbon black has a specific surface area based on a BET method of 200 $m^2/g$ or more.

5. The aqueous ink according to any one of claims 1 to 3, wherein the second functional group comprises a group represented by the following general formula (3):

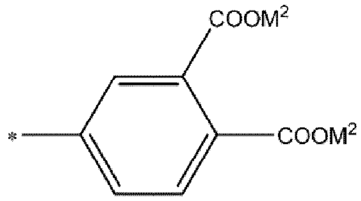 (3)

in the general formula (3), $M^2$s each independently represent a hydrogen atom, an alkali metal, ammonium or an organic ammonium, and * represents a bonding position to the surface of the particle of the pigment.

**6.** The aqueous ink according to any one of claims 1 to 5, wherein the total anionic group amount (mmol/g) of the first functional group and the second functional group is 0.08 mmol/g or more.

**7.** The aqueous ink according to any one of claims 1 to 6, further comprising a compound represented by the following general formula (4):

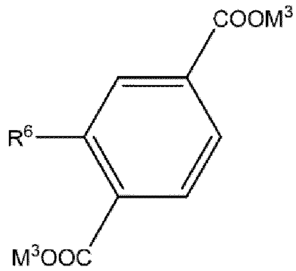 (4)

in the general formula (4), $R^6$ represents a hydroxy group or a nitro group, and $M^3$s each independently represent a hydrogen atom, an alkali metal, ammonium or an organic ammonium.

**8.** The aqueous ink according to claim 7, wherein a content C (mmol/kg) of the compound represented by the general formula (4) and a content P (% by mass) of the self-dispersible pigment in the aqueous ink satisfy a relationship represented by the following formula (5):
$0.010 \leq C\ (mmol/kg)/P\ (\%\ by\ mass) \leq 3.000$ (5).

**9.** An ink cartridge comprising:

an ink; and
an ink storage portion (14, 16) configured to store the ink,
wherein the ink comprises the aqueous ink according to any one of claims 1 to 8.

**10.** An ink jet recording method comprising ejecting an ink from a recording head (38, 40) of an ink jet system to record an image on a recording medium (32),
wherein the ink comprises the aqueous ink according to any one of claims 1 to 8.

FIG. 1

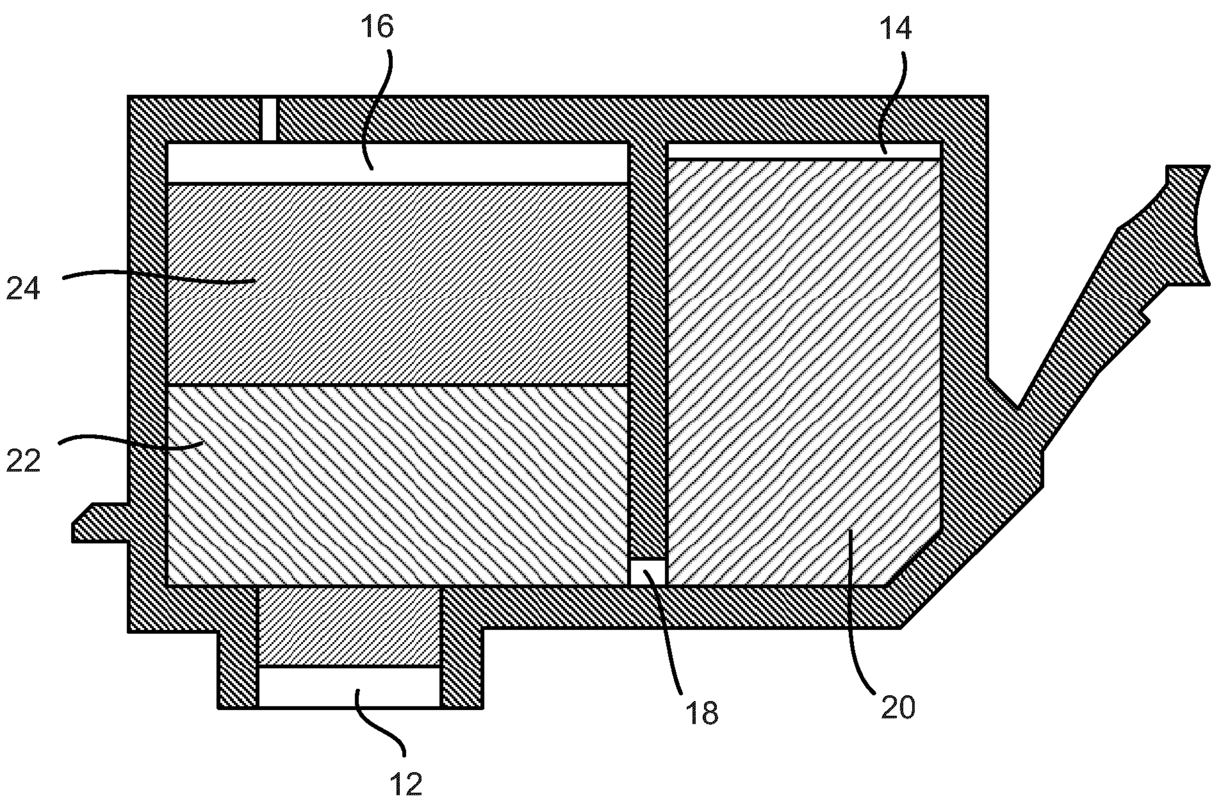

FIG. 2A

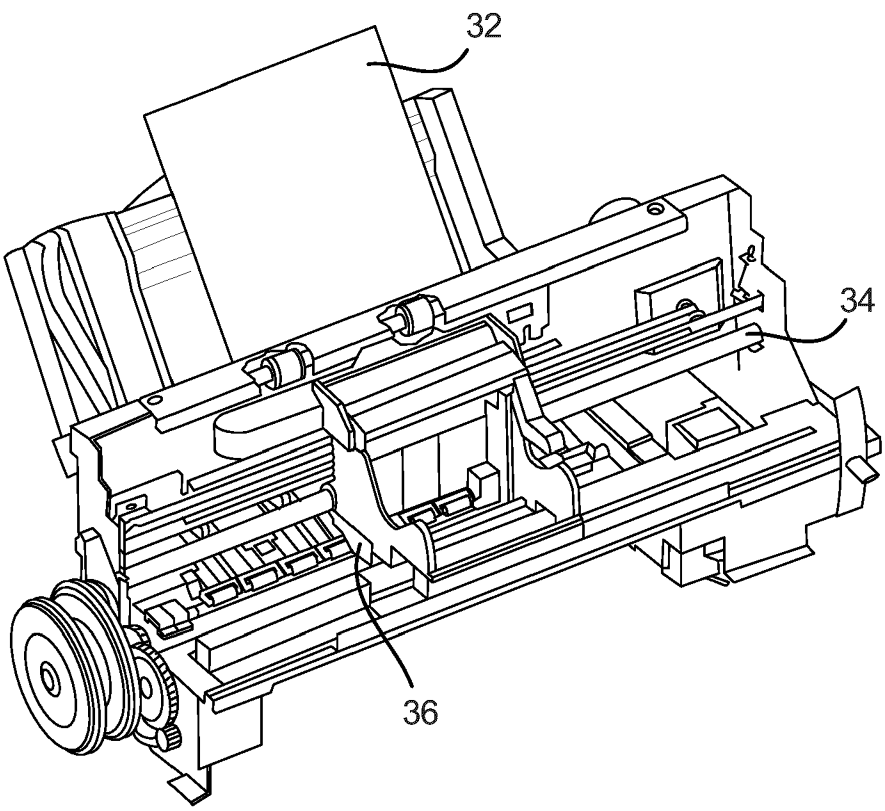

FIG. 2B

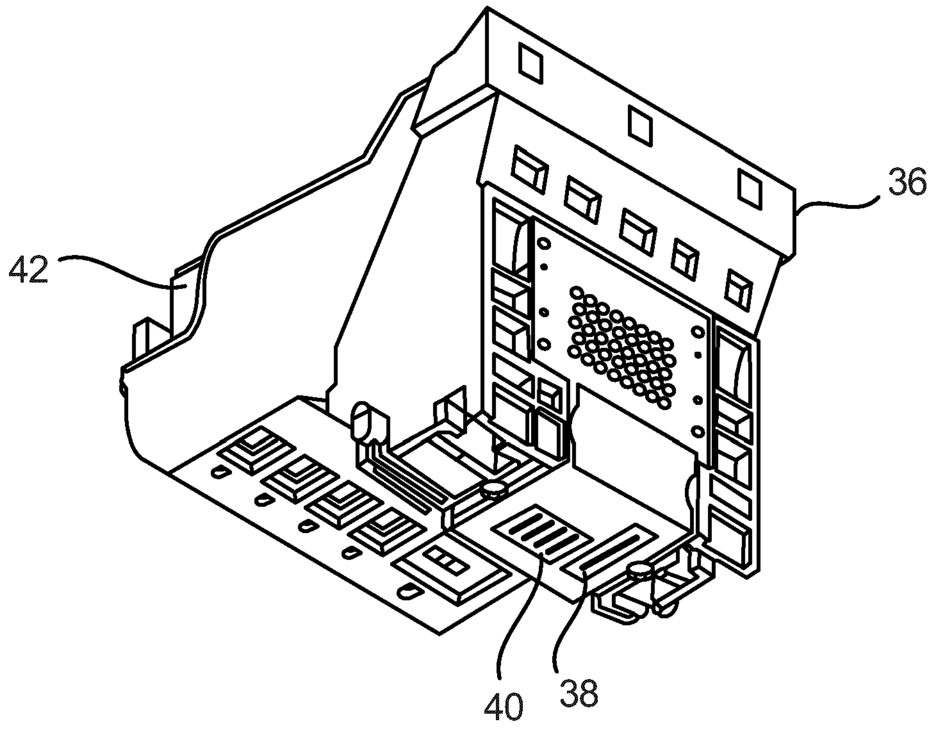

*FIG. 3*

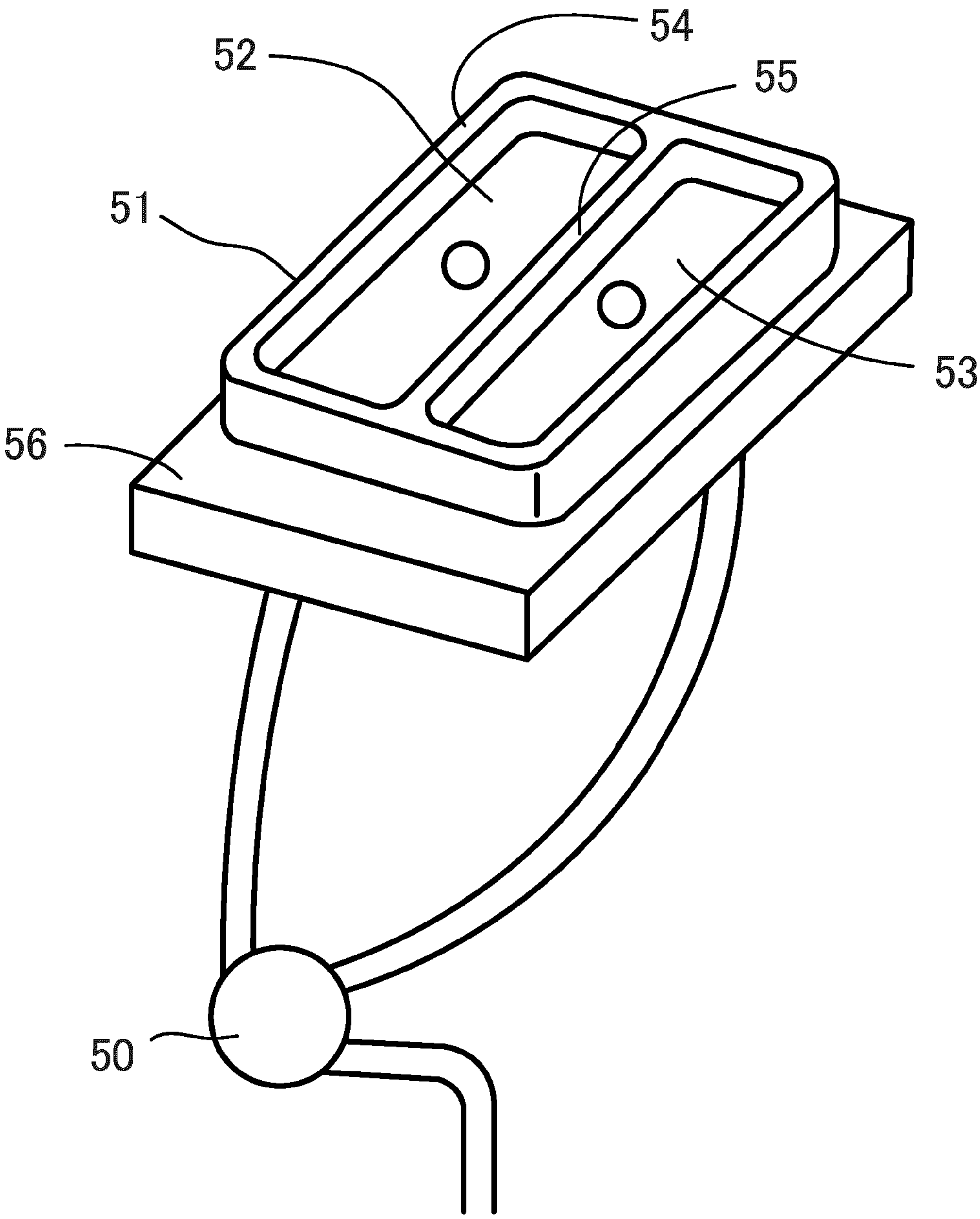

Europäisches Patentamt
European Patent Office
Office européen des brevets

# EUROPEAN SEARCH REPORT

Application Number
EP 25 19 7197

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 1 061 106 A1 (HEWLETT PACKARD CO [US]) 20 December 2000 (2000-12-20) * claims; examples * ----- | 1-10 | INV. C09D11/324 C09D11/322 C09D11/38 |
| A | US 2009/305011 A1 (MCINTOSH RALPH [DE] ET AL) 10 December 2009 (2009-12-10) * examples; table 1 * ----- | 1-10 | |
| A | EP 1 061 107 A1 (HEWLETT PACKARD CO [US]) 20 December 2000 (2000-12-20) * claims; examples * ----- | 1-10 | |
| A | JP 2006 008899 A (CANON KK) 12 January 2006 (2006-01-12) * claims; examples * ----- | 1-10 | |

TECHNICAL FIELDS SEARCHED (IPC)

C09D

The present search report has been drawn up for all claims

1

| Place of search | Date of completion of the search | Examiner |
|---|---|---|
| Munich | 14 January 2026 | Schmitz, Volker |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 25 19 7197

This annex lists the patent family members relating to the patent documents cited in the above-mentioned European search report. The members are as contained in the European Patent Office EDP file on
The European Patent Office is in no way liable for these particulars which are merely given for the purpose of information.

14-01-2026

| Patent document cited in search report | Publication date | Patent family member(s) | Publication date |
|---|---|---|---|
| EP 1061106 A1 | 20-12-2000 | DE 60004731 T2 | 01-07-2004 |
| | | EP 1061106 A1 | 20-12-2000 |
| | | JP 3993968 B2 | 17-10-2007 |
| | | JP 2001055532 A | 27-02-2001 |
| US 2009305011 A1 | 10-12-2009 | CN 101597441 A | 09-12-2009 |
| | | DE 102008026894 A1 | 10-12-2009 |
| | | EP 2130880 A1 | 09-12-2009 |
| | | JP 2009293030 A | 17-12-2009 |
| | | KR 20090127093 A | 09-12-2009 |
| | | US 2009305011 A1 | 10-12-2009 |
| EP 1061107 A1 | 20-12-2000 | DE 60004732 T2 | 08-07-2004 |
| | | EP 1061107 A1 | 20-12-2000 |
| | | JP 3993969 B2 | 17-10-2007 |
| | | JP 2001055533 A | 27-02-2001 |
| | | US 6221142 B1 | 24-04-2001 |
| JP 2006008899 A | 12-01-2006 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2009506196 A
- JP 2009 A
- JP 515007 A
- JP 2013253230 A
- JP 2009515007 A